# EUROPÄISCHE PATENTSCHRIFT

(11) **EP 4 241 148 B1**
(45) Veröffentlichungstag und Bekanntmachung des Hinweises auf die Patenterteilung: **27.03.2024**
(21) Anmeldenummer: 21777737.4
(22) Anmeldetag: 15.09.2021
(51) Int. Cl.: B65G 65/00, G05D 1/02, B65G 67/02, B65G 65/02, B65G 37/00

(54) **FÖRDERUNGSFAHRZEUG UND VERFAHREN ZUR FÖRDERUNG VON LADUNGSEINHEITEN AUF DAS FAHRZEUG**
CONVEYING VEHICLE AND METHOD FOR CONVEYING PAYLOAD UNITS ONTO THE VEHICLE
VÉHICULE DE TRANSPORT ET PROCÉDÉ DE TRANSPORT D'UNITÉS DE CHARGE UTILE SUR LE VÉHICULE

(30) Priorität: 08.11.2020 DE 102020129383
(43) Veröffentlichungstag der Anmeldung: 13.09.2023
(73) Patentinhaber: FRAUNHOFER GESELLSCHAFT ZUR FÖRDERUNG DER ANGEWANDTEN FORSCHUNG E.V., 80686 München (DE)
(72) Erfinder: BEHLING, Jan, 44227 Dortmund (DE); ROTGERI, Mathias, 44263 Dortmund (DE); EMMERICH, Jan Sören, 58313 Herdecke (DE); HÖNING, Dirk, 44869 Bochum (DE); KLOKOWSKI, Patrick, 44581 Castrop-Rauxel (DE); HAMMERMEISTER, Christian, 44145 Dortmund (DE); TEN HOMPEL, Michael, 44229 Dortmund (DE)
(74) Vertreter: Keller Schneider Patentanwaltsgesellschaft mbH
(86) Internationale Anmeldenummer: PCT/EP2021/075321
(87) Internationale Veröffentlichungsnummer: WO 2022/096185

(56) Entgegenhaltungen:
- EP-A1- 2 634 071
- DE-A1-102016 011 324
- US-A1- 2007 027 581

## Beschreibung

Die Erfindung betrifft ein Fahrzeug und ein Verfahren zur Förderung oder Überführung von Ladungseinheiten auf das Fahrzeug.

Das erfindungsgemäße Verfahren kann Anwendung insbesondere im Bereich von Sortieranlagen für Ladungsträger in Form von Paketen im Bereich von Sortieranlagen und insbesondere in einem Paketzentrum oder Ladungseinheiten in Form von Gepäckstücken eines Flughafens oder generell in Distributionszentren finden. Die Ladungseinheiten können in den Bereich einer Sortieranlage insbesondere durch Transportfahrzeuge wie Lastkraftwagen, Linienfahrzeuge oder Schiffe oder Flugzeuge, angeliefert worden sein.

Die EP 2 634 071 A1 beschreibt Ausführungsformen eines Fahrzeuggespanns mit einem Zugfahrzeug und einem Anhängerfahrzeug, das eine lenkbare Deichsel aufweist, die um die Drehachse eines Drehschemels drehbar ist, so dass das Zugfahrzeug und das Anhängerfahrzeug über eine Gelenkkupplung miteinander gekoppelt sind. In einem Datenspeicher des Anhängerfahrzeugs sind die Abmessung und die Fahrwerksgeometrie des Anhängerfahrzeugs einschließlich der Deichselgeometrie abgespeichert. In einem weiteren Datenspeicher des Zugfahrzeugs sind die Abmessungen und die Fahrwerksgeometrie des Zugfahrzeugs abgespeichert. Dementsprechend weisen die Ausführungsformen des Fahrzeuggespanns zwei Steuergeräte auf, und zwar ein Steuergerät des Zugfahrzeugs und ein Steuergerät des Anhängerfahrzeugs sowie einen Datenbus, über den die Steuergeräte miteinander kommunizieren.

Aufgrund von Messdaten einer Umfeldsensorik, die eine Kamera und Ultraschallsensoren aufweist, also unabhängig von dem jeweils vorhandenen Zugfahrzeug, ermittelt das Steuergerät des Anhängerfahrzeugs eine auf das Kupplungsauge der Anhängerkupplung bezogene Soll-Bahnkurve für das Anhängerfahrzeug und übermittelt diese an das Steuergerät des Zugfahrzeugs. Das Steuergerät des Zugfahrzeugs verarbeitet als Input Messdaten der Fahrzeugsensorik und ermittelt unter Berücksichtigung der Abmessungen und der Fahrwerksgeometrie des Zugfahrzeugs einen Verlauf des Soll-Lenkausschlags seiner lenkbaren Räder, der während eines Rangiervorgangs zum Abfahren der von dem Steuergerät des Anhängerfahrzeugs ermittelten Soll-Bahnkurve des Kupplungsauges der Deichsel erforderlich ist. Zur Berechnung des Soll-Lenkausschlags der Räder des Zugfahrzeugs wird der Soll-Lenkausschlags und auch ein Knickwinkel von entsprechenden Sensoren des Zugfahrzeugs zu den jeweils aktuellen Zeitpunkten erfasst.

Die DE 10 2016 011 324 A1 beschreibt ein Verfahren zur Steuerung eines Zugfahrzeugs bei dessen Heranfahren und Ankuppeln an ein Anhängerfahrzeug. Das Zugfahrzeug weist ein Steuergerät, eine Stereokamera zur Erfassung eines in Rückwärtsrichtung liegenden Umfeldbereichs und Aktuatoren zur Betätigung der Lenkung des Zugfahrzeugs auf. Die Kamera und die Aktuatoren sind funktional mit dem Steuergerät verbunden. In dem Steuergerät erfolgt eine Auswertung der von der Kamera erzeugten Bildinformationen. Bei dem Verfahren der DE 10 2016 011 324 A1 wird das Zugfahrzeug mit Abstand vor dem anzukuppelnden Anhängerfahrzeug aufgestellt. Durch Auswerten der von der Kamera übermittelten Bildinformationen ermittelt das Steuergerät eine Versatzstrecke und einen Versatzwinkel zwischen dem Zugfahrzeug und dem anzukuppelnden Anhängerfahrzeug und aufgrund dieser Werte eine Fahrtrajektorie für das Zugfahrzeug. Nach einem autonomen Heranfahren des Zugfahrzeugs an das Anhängerfahrzeug erfolgt ein Ankuppeln des Zugfahrzeugs an das Anhängerfahrzeug.

Die US 2007/0027581 A1 beschreibt das Manövrieren eines Anhängers durch ein Zugfahrzeug zu einem Rahmen. Hierfür ermittelt ein Computer des Zugfahrzeugs eine Trajektorie in Form von Bewegungsvektoren. Weiterhin erzeugt der Computer Steuerungsinstruktionen für das Zugfahrzeug derart, dass bei einem Rückwärts-Rangieren des Anhängers durch das Zugfahrzeug der Anhänger der Trajektorie folgt. Nach der US 2007/0027581 A1 wird somit eine einzelne Trajektorie für den Weg des Anhängers ermittelt und die Steuerungskommandos von der jeweils momentanen Position und Orientierung des Anhängers relativ zu der Trajektorie abgeleitet.

Aus der DE 103 35 568 A1 ist ein Verfahren zur Ankopplung von Robotern bekannt. Zur Ausführung eines genau vorgegebenen Fertigungsprozesses in einer vorgegebenen Fertigungsposition in einer automatisierten Fertigungsumgebung wird im gekoppelten Zustand der zu fahrende Kurs von einem der Roboter bestimmt und dem anderen Roboter übermittelt, so dass beiden Robotern der zu fahrende Kurs bekannt ist und beide selbständig diesen Kurs im gekoppelten Zustand fahren. Die Roboter nähern sich zum Ankoppeln durch an zwei Fahrzeugen zueinander komplementär geformten seitlichen Flanken von Vorsprüngen und Aussparungen an. Bei Ineinandergreifen der Vorsprünge und Aussparungen werden die Fahrzeuge aneinander verriegelt. Die Fahrzeuge können auch ohne Vorsprünge und Aussparungen realisiert sein. In diesem Fall erfolgt das Annähern und Ankoppeln der Fahrzeuge rein sensoriell.

Die DE 10 2019 122 055 A1 beschreibt ein Verfahren zur Übergabe von Ladegut von einem Aufnahmebauteil eines Fahrzeugs an eine Ladegutübernahmestation. Bei diesem Verfahren wird das Fahrzeug von einer Fahrzeugsteuerung derart gesteuert, dass sich der Geschwindigkeits-Vektor des Fahrzeugs unmittelbar vor oder an der Ladegutübernahmestation verändert. Auch beschreibt die DE 10 2019 122 055 A1 ein Fahrzeug mit einem Aufnahmebauteil, das an einem Seitenrand eine Randbegrenzung aufweist.

Die DE 10 2015 114 370 B4 beschreibt ein Transportsystem mit einem autonom verfahrbaren fahrerlosen Transportfahrzug, einer Übergabestation und einer Rampen/Gruben-Anordnung sowie eine Lager- und Kommissionieranlage.

Die DE 10 2018 117 844 A1 beschreibt eine Übergabestation für eine Transportvorrichtung, um Transportgut und/oder Stückgut mittels einem Übergaberechen an ein in einer Transportrichtung fahrendes Transportfahrzeug abzugeben. Der Übergaberechen weist zwei parallele Förderschienen auf, auf denen Transportgut aufliegend gefördert wird und die über einen Drehantrieb um eine horzontale Drehachse dehbar oder über einen Hubantrieb in vertikaler Richtung bewegbar sind, um das Transportgut Schwerkraft-unterstützt an eine Transportvorrichtung zu übergeben. Auch beschreibt die DE 10 2018 117 844 A1 ein Transportfahrzeug für die Übergabestation, wobei das Transportfahrzeug Transportgut an der Übergabestation übernimmt und von dieser abtransportiert oder das Transportfahrzeug Transportgut zu der Übergabestation transportiert und dort an den Übergaberechen übergibt. Weiterhin beschreibt die DE 10 2018 117 844 A1 eine Transportvorrichtung mit einer Fördereinrichtung und einer solchen Übergabestation.

Aufgabe der Erfindung ist, ein Fahrzeug und ein Verfahren bereitzustellen, mit dem auf einer Betriebsfläche oder in einem Betriebsbereich gelegene Ladungseinheiten auf möglichst effiziente Weise aufgeladen und weitertransportiert werden können.

Nach der Erfindung ist ein Fahrzeug mit einem Fahrwerk, einer Antriebsvorrichtung, einem Fahrzeugsystem und einem Aufnahmebauteil vorgesehen. Die Antriebsvorrichtung steht mit dem Fahrwerk in Verbindung und stellt einen Geschwindigkeitsvektor des Fahrzeugs auf einer Betriebsfläche ein, wobei der Geschwindigkeitsvektor auch dem Betrag nach gleich Null sein kann. Das Fahrzeug kann selbst-steuernd an eine Werkzeug-Vorrichtung ankoppeln und diese in einen Zustand und insbesondere Position und speziell zusätzlich Ausrichtung bewegen, in dem die Werkzeug-Vorrichtung eine Ladungseinheit von einer Betriebsfläche eines Betriebsbereiches aufnehmen und auf eine Aufnahmefläche des Fahrzeugs fördern und somit anordnen kann.

Dabei erzeugt das Fahrzeugsystem eine Soll-Andocktrajektorie von einer beliebigen Ist-Position des Fahrzeugs, in der sich das Fahrzeug in einem Abstand von der Werkzeug-Vorrichtung befindet, bis zu einem Soll-Andockzustand, in dem das Fahrzeug an der Werkzeug-Vorrichtung angedockt ist.

Unter "Andocken" wird hierin insbesondere verstanden:
(D1) Eine Außenfläche des Fahrzeugs kontaktiert eine Außenfläche der Werkzeug-Vorrichtung.
(D2) Das Fahrzeug ist an die Werkzeug-Vorrichtung angekoppelt, z.B. über eine mechanische Kopplungsvorrichtung.

Das Fahrzeugsystem erzeugt weiterhin eine Referenzstelle-Manövriertrajektorie für eine Referenzstelle der Werkzeug-Vorrichtung, gemäß der die Bewegung des Fahrzeugs gesteuert und die Werkzeug-Vorrichtung, wenn sich das Fahrzeug in einem an der Werkzeug-Vorrichtung angedockten Zustand befindet, von einem jeweiligen Werkzeug-Ist-Zustand in einen Werkzeug-Soll-Zustand manövriert wird. In dem Werkzeug-Soll-Zustand hat die Werkzeug-Vorrichtung relativ zu einer auf der Betriebsfläche gelegenen Ladungseinheit insbesondere eine Soll-Ausrichtung und eine Soll-Position. Alternativ oder zusätzlich kann der Werkzeug-Soll-Zustand derart definiert sein, dass eine Referenzstellen-Position der Referenzstelle innerhalb einer Soll-Differenz zu einer Ladungseinheit-Position der Ladungseinheit gelegen ist. Der Werkzeug-Soll-Zustand ist je nach der Ausführungsform der Werkzeug-Vorrichtung ein Zustand auf der Betriebsfläche, in dem die Werkzeug-Vorrichtung die Ladungseinheit aufnehmen und auf das Aufnahmebauteil des Fahrzeugs befördern und auflegen oder anordnen kann.

Dadurch, dass die Steuerung des Fahrzeugs auf der Basis der Soll-Andocktrajektorie und der Referenzstelle-Manövriertrajektorie erfolgt, erfolgt die Bewegung des Fahrzeugs von einem Fahrzeug-Ist-Zustand des Fahrzeugs bis zu einem Soll-Andockzustand des Fahrzeugs und von diesem in einen Soll-Aufnahmezustand des Fahrzeugs, auf effiziente Weise, da das Fahrzeug selbst in der Lage ist, durch Vorgabe von entsprechenden Trajektorien oder Auswahl von entsprechenden Trajektorien diesen Vorgang zu optimieren.

Durch das erfindungsgemäße Fahrzeug kann die Werkzeug-Vorrichtung in einfacher Weise gestaltet sein, so dass das erfindungsgemäße Verfahren insgesamt effizient ist. Die Werkzeug-Vorrichtung weist eine Aufnahmevorrichtung zur Aufnahme einer Ladungseinheit von der Betriebsfläche und zum Fördern der Ladungseinheit auf ein Aufnahmebauteil des Fahrzeugs auf. Beispielsweise kann die Werkzeug-Vorrichtung ohne Fahrwerk realisiert sein, so dass die Werkzeug-Vorrichtung auf der Betriebsfläche gleitet, wenn die Werkzeug-Vorrichtung vom Fahrzeug manövriert wird. Weiterhin kann die Werkzeug-Vorrichtung ohne Steuerungsvorrichtung realisiert sein. Auch kann die Werkzeug-Vorrichtung ohne Sensorik zur Erfassung des Werkzeug-Ist-Zustands oder eines Werkzeug-Soll-Zustands oder beider Zustände realisiert sein.

Das erfindungsgemäße Fahrzeug kann insbesondere mit einem Fahrzeugsystem realisiert sein, das eine Steuerungsfunktion aufweist, die funktional mit der Antriebsvorrichtung in Verbindung steht und aufgrund von Steuerungs-Sollvorgaben Steuerungskommandos ermittelt und diese an die Antriebsvorrichtung übermittelt. Das Fahrzeugsystem weist insbesondere eine Andock-Vorgabefunktion und eine Manövrier-Vorgabefunktion auf.

Erfindungsgemäß ist insbesondere ein Fahrzeug vorgesehen, das aufweist: ein Fahrwerk, eine Antriebsvorrichtung, die mit dem Fahrwerk in Verbindung steht und die einen Geschwindigkeitsvektor des Fahrzeugs auf einer Betriebsfläche einstellt, und einen an dem Fahrwerk angeordneten Fahrzeug-Rahmen mit einem Aufnahmebauteil zum Auflegen zumindest einer auf der Betriebsfläche gelegenen Ladungseinheit, wobei das Fahrzeug ein Fahrzeugsystem aufweist mit:
einer Steuerungsfunktion, die funktional mit der Antriebsvorrichtung in Verbindung steht und aufgrund von Steuerungs-Sollvorgaben Steuerungskommandos ermittelt und diese an die Antriebsvorrichtung übermittelt, um einen Geschwindigkeitsvektor des Fahrzeugs einzustellen,
einer Andock-Vorgabefunktion, die auf Basis von Angaben, die einen Fahrzeug-Ist-Zustand des Fahrzeugs zumindest mit einer Ist-Position definieren, eine Soll-Andocktrajektorie für das Fahrzeug zu einem Soll-Andockzustand erzeugt, wobei der Soll-Andockzustand durch Angaben beschrieben ist, die zumindest eine Soll-Position definieren und wobei bei dem Soll-Andockzustand das Fahrzeug mit einer Anlagevorrichtung des Fahrzeug-Rahmens an einer Andockvorrichtung einer Werkzeug-Vorrichtung angedockt ist, wobei die Andock-Vorgabefunktion an die Steuerungsfunktion die Soll-Andocktrajektorie als Steuerungs-Sollvorgabe zum Bewegen des Fahrzeugs entlang derselben übermittelt,
einer Manövrier-Vorgabefunktion mit einem Werkzeugbewegungs-Modell, das Angaben, die einen Werkzeug-Ist-Zustand zumindest mit einer Werkzeug-Ist-Position und einer Werkzeug-Ist-Ausrichtung einer Referenzstelle der Werkzeug-Vorrichtung definieren, in Angaben umrechnet, die eine Fahrzeug-Ist-Position und eine Fahrzeug-Ist-Ausrichtung definieren, wenn sich das Fahrzeug in einem an der Werkzeug-Vorrichtung angedockten Zustand befindet, wobei die Manövrier-Vorgabefunktion eine Manövriertrajektorien-Erzeugungsfunktion aufweist, die auf der Basis eines jeweiligen Werkzeug-Ist-Zustands eine Referenzstelle-Manövriertrajektorie und in Abhängigkeit von dieser mit dem Werkzeugbewegungs-Modell eine Fahrzeug-Manövriertrajektorie in einen Soll-Aufnahmezustand des Fahrzeugs ermittelt, entlang der das Fahrzeug die Werkzeug-Vorrichtung von dem Werkzeug-Ist-Zustand in einen Werkzeug-Soll-Zustand manövriert, bei dem eine Referenzstellen-Position der Referenzstelle innerhalb einer Soll-Differenz zu einer Ladungseinheit-Position der Ladungseinheit gelegen ist, wobei die Manövrier-Vorgabefunktion in Bezug auf die Fahrzeug-Manövriertrajektorie Steuerungs-Sollvorgaben zum Bewegen des Fahrzeugs entlang der Fahrzeug-Manövriertrajektorie an die Antriebsvorrichtung übermittelt.

Bei jeder der Ausführungsformen des erfindungsgemäßen Fahrzeugs kann vorgesehen sein, dass das Fahrzeug eine Aufnahmefunktion aufweist, die das Fahrzeug von dem Zeitpunkt, bei dem sich das Fahrzeug in dem Soll-Aufnahmezustand relativ zum Werkzeug-Sollzustand der Werkzeug-Vorrichtung befindet, in diesem Zustand hält, bis diese eine Ladungseinheit auf die Aufnahmefläche befördert hat.

Bei jeder der Ausführungsformen des erfindungsgemäßen Fahrzeugs kann vorgesehen sein, dass das Fahrzeug eine elektrische Kontaktierungsvorrichtung aufweist, die an einer Anlagefläche des Fahrzeug-Rahmens zum Anlegen an eine Andockvorrichtung der Werkzeug-Vorrichtung ausgebildet ist.

Bei jeder der Ausführungsformen des erfindungsgemäßen Fahrzeugs kann vorgesehen sein, dass das Fahrzeug eine Fahrzeug-Funktionsschnittstelle zum Anschluss an eine Werkzeug-Funktionsschnittstelle aufweist, die an einer Anlagefläche des Fahrzeug-Rahmens zum Anlegen an eine Anlagefläche einer Andockvorrichtung der Werkzeug-Vorrichtung ausgebildet ist und die zur Übermittlung eines Initiierungssignals zur Aktivierung einer Aufnahmefunktion der Werkzeug-Vorrichtung zur Beförderung der Ladungseinheit auf das Aufnahmebauteil des Fahrzeugs vorgesehen ist.

Bei jeder der Ausführungsformen des erfindungsgemäßen Fahrzeugs kann vorgesehen sein, dass das Fahrzeug ein Fahrzeugsystem mit einer Fahrzeug-Kommunikationsvorrichtung aufweist, die mit einer im Betriebsbereich stationären Logistik-Vorrichtung in Funkverbindung gebracht werden kann und bei Empfang Daten, die eine Ladungseinheit-Position zumindest einer Ladungseinheit definieren, an die Manövriertrajektorien-Erzeugungsfunktion übermittelt.

Bei jeder der Ausführungsformen des erfindungsgemäßen Fahrzeugs kann vorgesehen sein, dass das Fahrzeug ein Fahrzeugsystem mit einer Fahrzeug-Kommunikationsvorrichtung aufweist, die mit einer im Betriebsbereich stationären Logistik-Vorrichtung in Funkverbindung gebracht werden kann und, bei Empfang von Daten zum Werkzeug-Ist-Zustand zumindest einer Werkzeug-Vorrichtung von der Logistik-Vorrichtung, diese Daten an die Manövriertrajektorien-Erzeugungsfunktion übermittelt.

Bei jeder der Ausführungsformen des erfindungsgemäßen Fahrzeugs kann vorgesehen sein, dass das Fahrzeug ein Fahrzeugsystem mit einer Fahrzeug-Kommunikationsvorrichtung aufweist, die mit einer Werkzeug-Kommunikationsvorrichtung zumindest einer Werkzeug-Vorrichtung in Funkverbindung gebracht werden kann, die Daten zum Werkzeug-Ist-Zustand der Werkzeug-Vorrichtung an die Manövriertrajektorien-Erzeugungsfunktion übermittelt.

Bei jeder der Ausführungsformen des erfindungsgemäßen Fahrzeugs kann vorgesehen sein, dass das Fahrzeug ein Fahrzeugsystem mit einer Fahrzeug-Kommunikationsvorrichtung aufweist, die von einer Werkzeug-Kommunikationsvorrichtung Daten zum Werkzeug-Ist-Zustand der Werkzeug-Vorrichtung zur Übermittlung an die Manövriertrajektorien-Erzeugungsfunktion empfängt und aufgrund des Empfangs an die Manövriertrajektorien-Erzeugungsfunktion übermittelt.

Bei jeder der Ausführungsformen des erfindungsgemäßen Fahrzeugs kann vorgesehen sein, dass das Fahrzeug ein Fahrzeugsystem mit einer Fahrzeug-Kommunikationsvorrichtung aufweist, die mit einer Werkzeug-Kommunikationsvorrichtung zumindest einer Werkzeug-Vorrichtung in Funkverbindung oder in einer Leitungsverbindung mit einer elektrischen Kontaktierungsvorrichtung gebracht werden kann, die die Daten zum Werkzeug-Ist-Zustand der Werkzeug-Vorrichtung an die Manövriertrajektorien-Erzeugungsfunktion übermittelt und dabei von dieser aktuelle Daten zur Ladungseinheit-Position der Ladungseinheit zumindest einer auf der Betriebsfläche gelegenen Ladungseinheit empfängt.

Bei jeder der Ausführungsformen des erfindungsgemäßen Fahrzeugs kann vorgesehen sein, dass das Fahrzeug ein Fahrzeugsystem mit einer Priorisierungsfunktion aufweist, mit der nach einem Werkzeug-Auswahlkriterium zu einem aktuellen Zeitpunkt eine Werkzeug-Vorrichtung als nächste von dem Fahrzeug mit einer Soll-Trajektorie anzusteuernde Werkzeug-Vorrichtung von den zu dem aktuellen Zeitpunkt auf der Betriebsfläche befindlichen Werkzeug-Vorrichtungen ausgewählt wird.

Bei jeder der Ausführungsformen des erfindungsgemäßen Fahrzeugs kann vorgesehen sein, dass das Fahrzeug einen Identifikationszeichen-Sensor aufweist, der am Aufnahmebauteil des Fahrzeugs angeordnet ist, um ein Identifikationszeichen einer Ladungseinheit zu erfassen. Bei diesen Ausführungsformen des erfindungsgemäßen Fahrzeugs kann der Identifikationszeichen-Sensor in der Schwerkraftrichtung unterhalb einer Aufnahmefläche des Aufnahmebauteils angeordnet sein, um ein Identifikationszeichen einer Ladungseinheit zu erfassen.

Bei jeder der Ausführungsformen des erfindungsgemäßen Fahrzeugs kann vorgesehen sein, dass die Anlagevorrichtung des Fahrzeug-Rahmens eine Außenfläche oder eine Kopplungsvorrichtung des Fahrzeugs ist.

Nach einem weiteren Aspekt der Erfindung ist ein Verfahren zum Bewegen eines Fahrzeugs auf einer Betriebsfläche und zum Befördern zumindest einer Ladungseinheit, die auf der Betriebsfläche gelegen ist, auf ein Aufnahmebauteil des Fahrzeugs vorgesehen, das Verfahren aufweisend die folgenden Schritte:
Andocken des Fahrzeugs an eine Werkzeug-Vorrichtung durch Steuern des Fahrzeugs entlang einer Soll-Andocktrajektorie, die von einer Andock-Vorgabefunktion auf Basis von Angaben, die einen Ist-Zustand des Fahrzeugs mit zumindest einer Ist-Position definieren, zu einem Soll-Andockzustand des Fahrzeugs ermittelt worden ist, wobei der Soll-Andockzustand durch Angaben beschrieben ist, die zumindest eine Soll-Position definieren, und wobei bei dem Soll-Andockzustand das Fahrzeug an einer Anlagevorrichtung des Fahrzeug-Rahmens an einer Andockvorrichtung der Werkzeug-Vorrichtung angedockt ist,

Manövrieren der Werkzeug-Vorrichtung, an der das Fahrzeug angedockt ist, durch Steuern des Fahrzeugs entlang einer Fahrzeug-Manövriertrajektorie zu einem Soll-Aufnahmezustand des Fahrzeugs als Steuerungs-Sollvorgabe, wobei die Fahrzeug-Manövriertrajektorie aufgrund einer Referenzstelle-Manövriertrajektorie und eines Werkzeugbewegung -Modells ermittelt worden ist, das Angaben, die einen Werkzeug-Ist-Zustand mit einer Werkzeug-Ist-Position und eine Werkzeug-Ist-Ausrichtung einer Referenzstelle der Werkzeug-Vorrichtung definieren, in Angaben umrechnet, die eine Fahrzeug-Ist-Position und eine Fahrzeug-Ist-Ausrichtung definieren, wobei bei dem Soll-Aufnahmezustand des Fahrzeugs die Referenzstelle der Werkzeug-Vorrichtung in einem vorbestimmten Relativzustand bezüglich der Ist-Position der Ladungseinheit gelegen ist.

Bei jeder der Ausführungsformen des erfindungsgemäßen Verfahrens kann vorgesehen sein, dass nach dem Erreichen des Soll-Aufnahmezustands des Fahrzeugs die Steuerungsfunktion Steuerungs-Sollvorgaben erzeugt, mit denen das Fahrzeug in dem Fahrzeug-Aufnahmezustand relativ zum Werkzeug-Aufnahmezustand der Werkzeug-Vorrichtung gehalten wird, bis die Werkzeug-Vorrichtung eine Ladungseinheit auf das Aufnahmebauteil gefördert hat.

Bei jeder der Ausführungsformen des erfindungsgemäßen Verfahrens kann vorgesehen sein, dass die Werkzeug-Vorrichtung mittels einer Positionssensor-Vorrichtung Positionsdaten zu einer Ist-Position der Werkzeug-Vorrichtung ermittelt und an eine Werkzeug-Kommunikationsvorrichtung übermittelt,
wobei die Werkzeug-Kommunikationsvorrichtung die Positionsdaten zu einer Ist-Position der Werkzeug-Vorrichtung über Funk oder über eine Leitungsverbindung mit einer elektrischen Kontaktierungsvorrichtung an eine Fahrzeug-Kommunikationsvorrichtung übermittelt,
wobei die Fahrzeug-Kommunikationsvorrichtung die Positionsdaten zu einer Ist-Position der Werkzeug-Vorrichtung nach dem Empfang derselben an die Manövriertrajektorien-Erzeugungsfunktion übermittelt.

Bei jeder der Ausführungsformen des erfindungsgemäßen Verfahrens kann vorgesehen sein,
dass die Werkzeug-Vorrichtung mittels eines Ladungseinheit-Sensors aktuelle Daten zu einer Ladungseinheit-Position zumindest einer auf der Betriebsfläche gelegenen Ladungseinheit ermittelt und diese Daten über eine Funkverbindung oder über eine elektrische Leitungsverbindung mit einer elektrischen Kontaktierungsvorrichtung an eine Fahrzeug-Kommunikationsvorrichtung übermittelt, und
dass die Fahrzeug-Kommunikationsvorrichtung die Positionsdaten zu einer Ladungseinheit-Position der zumindest einen Ladungseinheit nach dem Empfang derselben an die Manövriertrajektorien-Erzeugungsfunktion übermittelt.

Bei jeder der Ausführungsformen des erfindungsgemäßen Verfahrens kann vorgesehen sein,
dass das Fahrzeugsystem mittels einer Priorisierungsfunktion nach einem Werkzeug-Auswahlkriterium zu einem aktuellen Zeitpunkt eine Werkzeug-Vorrichtung als nächste von dem Fahrzeug mit einer Soll-Trajektorie anzusteuernde Werkzeug-Vorrichtung von den Werkzeug-Vorrichtungen, die zu dem aktuellen Zeitpunkt auf der Betriebsfläche befindlich sind, auswählt, und
dass aufgrund der Auswahl der als nächstes anzusteuernden Werkzeug-Vorrichtung eine Initiierung der Andock-Vorgabefunktion und die Ermittlung der Soll-Andocktrajektorie zu dem Soll-Andockzustand des Fahrzeugs an der Andockvorrichtung der ausgewählten Werkzeug-Vorrichtung erfolgt.

Bei diesen Ausführungsformen des erfindungsgemäßen Verfahrens kann vorgesehen sein, dass das Werkzeug-Auswahlkriterium einen Vergleich von Abständen zwischen vom Fahrzeugsystem empfangenen Ist-Positionen der jeweiligen Werkzeug-Vorrichtungen zu einer vom Fahrzeugsystem empfangenen Ist-Position von auf der Betriebsfläche gelegenen Ladungseinheit durchführt und diejenige Werkzeug-Vorrichtung auswählt, die einen geringsten Abstand zu der Ladungseinheit hat.

Weiterhin kann bei diesen Ausführungsformen des erfindungsgemäßen Verfahrens vorgesehen sein, dass das Werkzeug-Auswahlkriterium einen Vergleich von Abständen zwischen vom Fahrzeugsystem empfangenen Ist-Positionen der jeweiligen Werkzeug-Vorrichtungen zu der Ist-Position des Fahrzeugs durchführt und diejenige Werkzeug-Vorrichtung auswählt, die einen geringsten Abstand zu der Ist-Position des Fahrzeugs hat.

Bei jeder der Ausführungsformen des erfindungsgemäßen Verfahrens kann vorgesehen sein,
dass nach dem Andocken das Fahrzeug mit einer Anlagevorrichtung des Fahrzeug-Rahmens an der Andockvorrichtung einer Werkzeug-Vorrichtung und dem Manövrieren der Werkzeug-Vorrichtung in den Werkzeug-Sollzustand die Werkzeug-Vorrichtung die Ladungseinheit mittels einer Fördervorrichtung auf das Aufnahmebauteil des Fahrzeugs befördert,
dass die Fördervorrichtung einen Identifikationszeichen-Sensor aufweist, an dem die Ladungseinheit während des Beförderns desselben auf das Aufnahmebauteil vorbeibewegt wird und ein Identifikationszeichen einer Ladungseinheit erfasst wird,
dass der Identifikationszeichen-Sensor der Werkzeug-Vorrichtung mit der Werkzeug-Kommunikationsvorrichtung funktional verbunden ist und das Identifikationszeichen an die Werkzeug-Kommunikationsvorrichtung übermittelt, nach dem das Identifikationszeichen erfasst worden ist, und
dass die Werkzeug-Kommunikationsvorrichtung nach Empfang des Identifikationszeichens dieses an eine Logistik-Vorrichtung oder das Fahrzeug übermittelt.

Bei jeder der Ausführungsformen des erfindungsgemäßen Verfahrens kann vorgesehen sein,
dass bei dem Befördern der Ladungseinheit auf das Fahrzeug ein Identifikationszeichen von einem Identifikationszeichen-Sensor des Fahrzeugs erfasst wird,
dass der Identifikationszeichen-Sensor des Fahrzeugs mit der Fahrzeug-Kommunikationsvorrichtung funktional verbunden ist und das Identifikationszeichen an die Fahrzeug-Kommunikationsvorrichtung übermittelt, nach dem das Identifikationszeichen erfasst worden ist, und
dass die Fahrzeug-Kommunikationsvorrichtung nach Empfang des Identifikationszeichens dieses an eine Logistik-Vorrichtung übermittelt.

Unter der Bezeichnung "Ladungseinheiten" kann hierin generell ein Ladungsträger oder Container verstanden werden, in dem jeweils damit zu transportierendes Material wie Stückgut oder auch Flüssigkeiten oder Gas enthalten sind oder nicht. Ladungseinheiten können auch Pakete oder insbesondere geschlossene oder an einer in Schwerkraftrichtung oberen Seite offenen Behälter sein.

Der Ausdruck "entlang" bedeutet hierin im Zusammenhang mit einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel von maximal 45 Grad und insbesondere von maximal 30 Grad von der jeweiligen Bezugsrichtung bzw. Bezugsachse abweicht, auf die die jeweilige Richtungsangabe bezogen ist.

Der Ausdruck "quer" bedeutet hierin im Zusammenhang mit einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel, der zwischen 45 Grad und 135 Grad beträgt, und vorzugsweise mit einem Winkel, der zwischen 67 Grad und 113 Grad beträgt, von der jeweiligen Bezugsrichtung bzw. Bezugsachse abweicht, auf die die jeweilige Richtungsangabe bezogen ist.

Unter dem Begriff "Abstand" insbesondere zwischen zwei Flächen wird hierin insbesondere der kürzeste Abstand verstanden.

Spezieller kann hierin unter einem "Abstand" insbesondere zwischen zwei Gegenständen oder zwei Flächen oder Bezugspunkten insbesondere die kürzeste Entfernung oder der kürzeste Abstand zwischen den zwei Gegenständen oder Flächen oder Bezugspunkten verstanden werden, wobei die kürzeste Entfernung oder der kürzeste Abstand dem Betrag nach ungleich Null ist, sofern hierin in dieser Hinsicht explizit keine andere Angabe gemacht wird.

Eine "Längsrichtung" oder eine andere Referenzrichtung einer Referenzlinie, wie insbesondere eine zentrale Achse oder eine mittig verlaufende Linie oder eine Mittellinie zumindest einer Strukturkomponente oder eines Bauteils und insbesondere einer Führungsbahn ergibt sich hierin insbesondere als Verbindungslinie der Flächenschwerpunkte der jeweils kleinsten Querschnittsflächen der jeweiligen Strukturkomponente entlang einer ermittelten oder vorgegebenen Richtung oder zwischen zwei ermittelten oder vorgegebenen Enden. In dem Fall, dass die Referenzlinie gekrümmt oder zumindest abschnittsweise gekrümmt verlaufen kann, kann die Referenzrichtung generell als lokale Längsrichtung verstanden werden. Dabei kann die Referenzrichtung hierin jedoch auch als die Richtung einer geradlinig definierten Referenzlinie verstanden werden, wobei zur Ermittlung der geradlinigen Referenzlinie eine Linie verwendet wird, deren Lage relativ zu der gekrümmten Linie in der Summe die geringste Abweichung zwischen diesen Linien oder die geringste Abweichungsfläche ergibt. Dasselbe gilt, falls hierin eine geradlinige Referenzlinie aus einer gekrümmten Linie abzuleiten ist.

Unter der Bezeichnung "im Wesentlichen" in Bezug auf ein Merkmal oder einen Wert wird hierin insbesondere verstanden, dass das Merkmal eine Abweichung von 20 % und speziell von 10 % von dem Merkmal oder dessen geometrischen Eigenschaft bzw. des Werts enthält.

Unter "Ausrichtung" in Bezug auf eine Fläche und insbesondere Oberfläche wird hierin die Normale auf die jeweilige Oberfläche verstanden. Für den Fall, dass es sich bei der betreffenden Oberfläche nicht um eine gerade, sondern beispielsweise eine gekrümmte Oberfläche handelt, kann zur Ermittlung der Oberflächen-Normalen die Normale auf eine gerade Oberfläche derselben Größe verwendet werden, für deren Lage sich relativ zu gekrümmten Oberfläche in der Summe die geringste Abweichung ergibt.

Unter einer "Erstreckung" eines Flächenabschnitts wird eine Richtung eines ebenen Flächenabschnitts verstanden, der entlang des in Bezug genommenen Flächenabschnitts verläuft und in Bezug zu diesem eine derartige Lage hat, bei der die Summe der Abweichungsbeträge zwischen beiden Flächenabschnitten minimal ist. In Bezug auf einen Längenbetrag der Erstreckung eines Flächenabschnitts wird hierin eine Länge eines fiktiven Flächenabschnitts derselben Größe in einer zu definierenden Richtung verstanden, der eine Lage hat relativ zu dem referenzierten Flächenabschnitt hat, bei der die Summe der Abweichungsbeträge zwischen beiden Flächenabschnitten minimal ist.

Unter der Bezeichnung "kontinuierlich" oder "kontinuierlich zusammenhängend" insbesondere in Bezug auf eine Fläche oder einer sich in zumindest einer Längsrichtung erstreckenden Strukturkomponente, wie eine Haut, eine Platte oder Wandung, wird hierin verstanden, dass die Fläche oder Strukturkomponente ununterbrochen verläuft.

Unter einem "kontinuierlichen Verlauf" einer Linie oder Kante oder Oberfläche ist gemeint, dass die Oberfläche entlang einer Referenzrichtung gesehen über die gesamte quer zur Referenzrichtung verlaufende Breite keine Ecke aufweist, d.h. differenzierbaren Verlauf hat. Unter einem "gekrümmten Verlauf" einer Linie oder Kante oder Oberfläche ist gemeint, dass die Oberfläche entlang einer Referenzrichtung gesehen über die gesamte quer zur Referenzrichtung verlaufende Breite keine Ecke aufweist, d.h. differenzierbaren Verlauf hat.

Unter der Bezeichnung "Betriebsbereich" wird hierin ein Bewegungsbereich der hierin beschriebenen Fahrzeuge oder Vorrichtungen verstanden, wenn diese bestimmungsgemäß bewegt werden oder sich bewegen. Der Betriebsbereich stellt insbesondere eine Oberfläche bereit, die eine Betriebsfläche oder Fahrauflage für das erfindungsgemäße Fahrzeug und die zumindest eine in diesem Zusammenhang verwendete Werkzeug-Vorrichtung sowie von durch diese zu bewegenden Ladungseinheiten bietet. Die Betriebsfläche oder Fahrauflage ist eine Oberfläche, die sich z.B. eben erstreckt. Dabei kann die Betriebsfläche einen kontinuierlichen Verlauf haben. Alternativ dazu oder zusätzlich kann die Betriebsfläche Stufen, kleine Rampen, Schwellen aufweisen. Auch kann die Betriebsfläche aus Böden von mehreren Hallen gebildet sein.

Das erfindungsgemäße Fahrzeug ist insbesondere zur Ausführung von Fahrbewegungen auf einer Betriebsfläche eines Betriebsbereiches vorgesehen. Die Betriebsfläche ist als eine Fahrauflage für das Fahrzeug gebildet. Die Betriebsfläche kann eine kontinuierliche Oberfläche sein, oder eine diskontinuierliche Fläche, wie z.B. ein Gitter, sein, wobei die Betriebsfläche eine Oberfläche ausbildet, die sich planar erstreckt. Dabei kann die Oberfläche auch Stufen und Ausformungen wie z.B. Rampen oder Stufen oder Rinnen aufweisen.

Unter der Bezeichnung "Position" eines Punktes wie eines Referenzpunktes oder eines Körpers wird hierin die in Flächenkoordinaten / Raumkoordinaten und insbesondere in den drei Raumkoordinaten definierte Position des Punktes wie des Referenzpunktes oder des Körpers verstanden. Bei einer Position eines Körpers wird hierin insbesondere die Position eines Zentrums oder Mittelpunkts und insbesondere Schwerpunkts des Körpers verstanden.

Das erfindungsgemäße Fahrzeug ist insbesondere ein selbst-steuerndes Fahrzeug, d.h. dieses kann ohne manuelle Steuerung vorbestimmte Aufgaben ausführen, sondern die zur Aufgabenerfüllung ausgeführten Fahrbewegungen des Fahrzeugs erfolgen automatisch, also ohne manuellen Eingriff.

Unter Fahrzeug-Zustand wird hierin ein Zustand des Fahrzeugs verstanden, der durch eine oder mehrere der folgenden Angaben definiert ist: durch eine Position, eine Geschwindigkeit und eine momentane Ausrichtung des Fahrzeugs, insbesondere einer Längsachse des Fahrzeugs. Der Fahrzeug-Zustand kann insbesondere ein Fahrzeug-Soll-Zustand oder ein Fahrzeug-Ist-Zustand des Fahrzeugs, der ein zeitlich aktueller Fahrzeug-Zustand ist, sein.

Die Kombination aus einer Geschwindigkeit und einer (Fahrt-)Richtung eines Fahrzeugs oder einer Vorrichtung und insbesondere einer Werkzeug-Vorrichtung ist durch einen Geschwindigkeitsvektor des Fahrzeugs bzw. der Werkzeug-Vorrichtung definierbar, da dieser den Betrag der Geschwindigkeit und die (Fahrt-)Richtung des Fahrzeugs bzw. der Werkzeug-Vorrichtung angibt. Unter Geschwindigkeitsvektor wird hierin eine Kombination von Daten verstanden, die die Geschwindigkeit und die (Fahrt-)Richtung des Fahrzeugs bzw. der Werkzeug-Vorrichtung angibt. Der Geschwindigkeitsvektor kann auch den Zustand definieren, bei dem das Fahrzeug oder einer Vorrichtung nicht bewegt wird, also der Betrag der Geschwindigkeit gleich Null ist.

Unter "Ausrichtung" eines Fahrzeugs oder einer Werkzeug-Vorrichtung wird eine Richtung einer definierten oder vorbestimmten Längsachse des Fahrzeugs bzw. der Werkzeug-Vorrichtung verstanden. Die Längsachse kann insbesondere eine Mittellinie oder Mittelachse des Fahrzeugs bzw. der Werkzeug-Vorrichtung sein. Die Ausrichtung des Fahrzeugs bzw. der Werkzeug-Vorrichtung ist insbesondere eine Richtung, die in der Steuerungsfunktion als Referenz hinterlegt sein kann. Die Ausrichtung eines Fahrzeugs kann insbesondere mit der Fahrtrichtung des Fahrzeugs übereinstimmen, die das Fahrzeug bei einer von einer Neutralstellung des Fahrwerks oder der Räder des Fahrwerks und insbesondere einer von einer Lenkungsvorrichtung eingestellten Neutralstellung des Fahrwerks oder der Räder des Fahrwerks hat.

Die Position und die Geschwindigkeit des Fahrzeugs können insbesondere auf einen vorbestimmten Referenzpunkt des Fahrzeugs bezogen sein.

Unter Werkzeugzustand wird hierin ein Zustand der Werkzeug-Vorrichtung verstanden, der durch einen oder mehrere der folgenden Angaben definiert ist: eine Position, eine Geschwindigkeit und eine momentane Ausrichtung der Werkzeug-Vorrichtung, insbesondere einer Längsachse der Werkzeug-Vorrichtung. Der Werkzeug-Zustand kann insbesondere ein Werkzeug-Soll-Zustand oder ein Werkzeug-Ist-Zustand des Fahrzeugs, der ein zeitlich aktueller Werkzeug-Zustand ist, sein. Die Position und Geschwindigkeit der Werkzeug-Vorrichtung können insbesondere auf einen vorbestimmten Referenzpunkt der Werkzeug-Vorrichtung bezogen sein. Die Längsrichtung ist eine Richtung, die insbesondere in der Steuerungsfunktion als Referenz hinterlegt ist.

Der Werkzeug-Soll-Zustand kann beispielsweise definiert sein durch einen Zustand der Werkzeug-Vorrichtung relativ zu einem Zustand einer von der Werkzeug-Vorrichtung aufzunehmenden oder zu befördernden Ladungseinheit, wobei diese Zustände eine oder beide der folgenden Bedingungen erfüllen:
(b1) die Ausrichtung der Werkzeug-Vorrichtung und die Verbindungslinie zwischen einem vorbestimmten Zentrum oder einem vorbestimmten Schwerpunkt der Werkzeug-Vorrichtung und einem vorbestimmten Zentrum oder einem vorbestimmten Schwerpunkt der Ladungseinheit sind identisch oder liegen zueinander in einem vorbestimmten Winkelbereich, z.B. einem Winkelbereich zwischen 0 Grad und 45 Grad,
(b2) das vorbestimmte Zentrum oder der Schwerpunkt der Werkzeug-Vorrichtung und das vorbestimmte Zentrum oder der Schwerpunkt der Ladungseinheit liegen zueinander in einem vorbestimmten Abstand oder Abstandbereich, so dass eine Aufnahmevorrichtung der Werkzeug-Vorrichtung in einem aktivierten Zustand die Ladungseinheit auf ein Aufnahmebauteil des Fahrzeugs bewegt.

Unter Aufgabenerfüllung wird hierin verstanden, dass das Fahrzeug im Betriebsbereich Missionsaufgaben erfüllt, die insbesondere Logistik-Aufgaben sind. Eine Logistik-Aufgabe ist die Annäherung eines Fahrzeugs, gesteuert durch eine Steuerungsfunktion, an eine Werkzeug-Vorrichtung und das Bewegen oder Manövrieren der Werkzeug-Vorrichtung durch dasselbe Fahrzeug, gesteuert durch eine Steuerungsfunktion, in einen vorbestimmten Stellzustand relativ zu einer von der Werkzeug-Vorrichtung aufzunehmenden Ladungseinheit.

Unter "selbst-steuernd" wird hierin in Bezug auf ein Fahrzeug insbesondere verstanden, dass das Fahrzeug eine Missionsaufgabe mit Stellkommandos an eine Antriebsvorrichtung zur Steuerung des Fahrzeugs erfüllt, die eine Steuerungsfunktion des Fahrzeugs selbst mittels Steuerungskommandos aufgrund von Steuerungs-Sollvorgaben erzeugt. Die Erfüllung einer Missionsaufgabe ist hierbei insbesondere das Folgen von ermittelten spezifischen Trajektorien durch die Steuerungskommandos oder Stellkommandos an eine Antriebsvorrichtung.

Im Folgenden werden Ausführungsformen der Erfindung an Hand der beiliegenden Figuren beschrieben. Hierin ist die Beschreibung von Merkmalen oder Komponenten von erfindungsgemäßen Ausführungsformen so zu verstehen, dass eine betreffende Ausführungsform erfindungsgemäß, sofern dies nicht explizit ausgeschlossen ist, auch zumindest ein Merkmal einer anderen Ausführungsform aufweisen kann, jeweils als zusätzliches Merkmal dieser betreffenden Ausführungsform oder als alternatives Merkmal, das ein anderes Merkmal dieser betreffenden Ausführungsform ersetzt. Die Figuren zeigen:

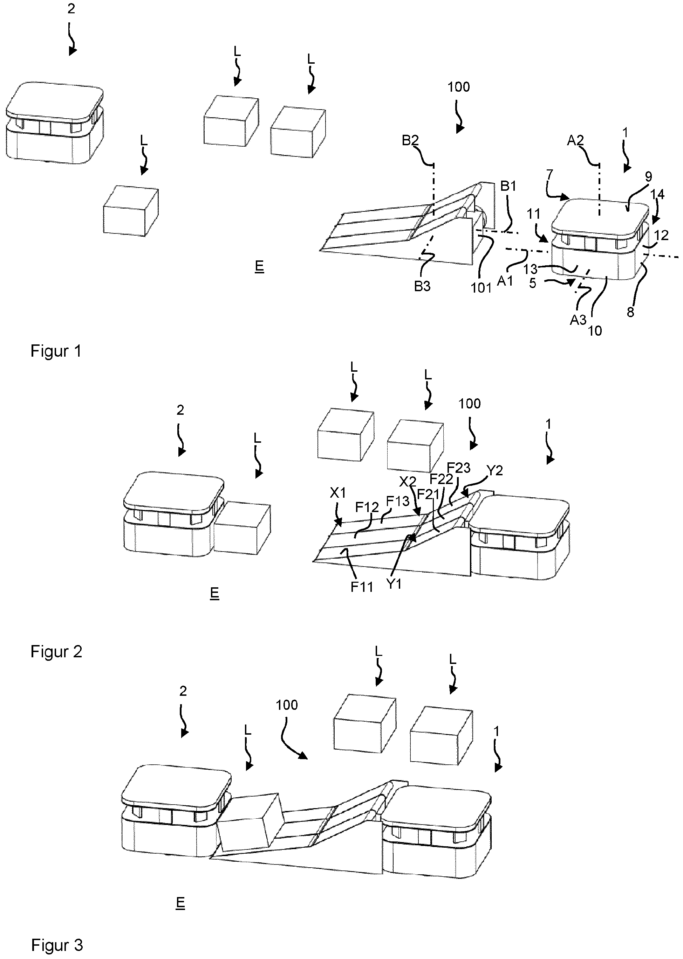

Figur 1 eine erste Betriebskonstellation auf einer Betriebsfläche, die erste Betriebskonstellation aufweisend: eine erste Ausführungsform eines ersten Fahrzeugs nach der Erfindung, eine Ausführungsform einer Werkzeug-Vorrichtung, drei Ladungseinheiten und ein zweites Fahrzeug in einer zweiten Ausführungsform nach der Erfindung; wobei sich die Ladungseinheiten zwischen dem zweiten Fahrzeug und der Anordnung aus der Werkzeug-Vorrichtung und dem ersten Fahrzeug befinden und sich das erste Fahrzeug in einem Abstand von der Werkzeug-Vorrichtung befindet,
Figur 2 eine gegenüber der Betriebskonstellation der Figur 1 veränderte Betriebskonstellation, bei der sich das zweite Fahrzeug einer ersten Ladungseinheit angenähert und das zweite Fahrzeug der Werkzeug-Vorrichtung angenähert hat,
Figur 3 eine gegenüber der Betriebskonstellation der Figur 2 veränderte Betriebskonstellation, bei der gegenüber der Betriebskonstellation der Figur 2 das erste Fahrzeug die Werkzeug-Vorrichtung bis zur ersten Ladungseinheit und zum zweiten Fahrzeug hin manövriert hat, wobei die Werkzeug-Vorrichtung die erste Ladungseinheit auf einer Fördervorrichtung derselben aufgenommen hat,

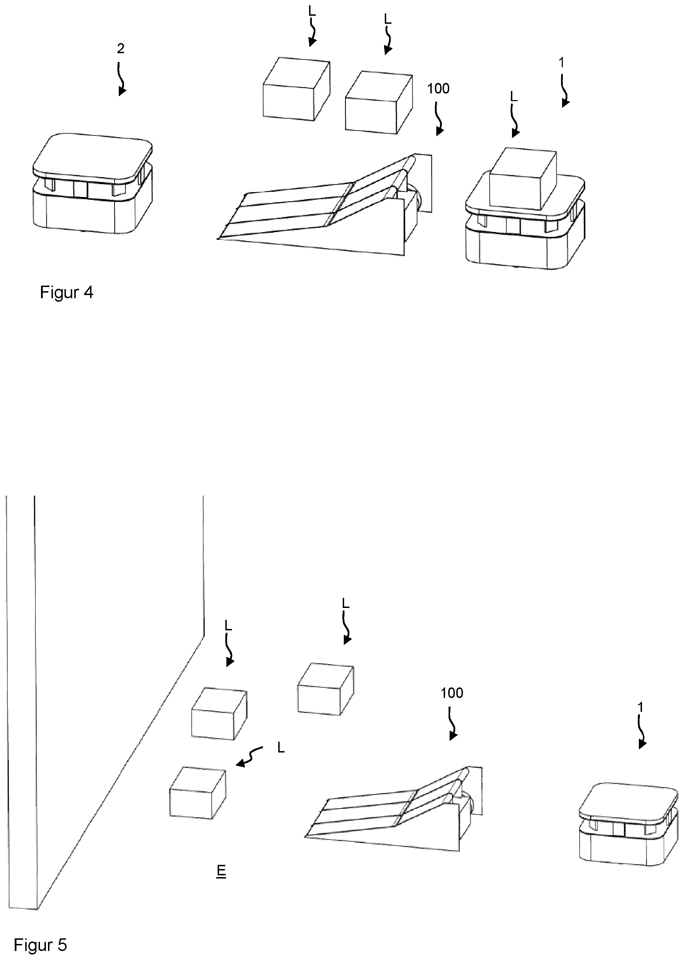

Figur 4 eine gegenüber der Betriebskonstellation der Figur 3 veränderte Betriebskonstellation, bei der gegenüber der Betriebskonstellation der Figur 3 die erste Ladungseinheit durch die Werkzeug-Vorrichtung auf ein Aufnahmebauteil des ersten Fahrzeugs aufgeladen worden ist und sich das erste Fahrzeug wieder von der Werkzeug-Vorrichtung weg bewegt hat,
Figur 5 eine zweite Betriebskonstellation auf einer Betriebsfläche, die zweite Betriebskonstellation aufweisend: die erste Ausführungsform des Fahrzeugs nach der Erfindung, die Ausführungsform einer Werkzeug-Vorrichtung nach den Figuren 1 bis 4, drei Ladungseinheiten und eine Begrenzungswand der Betriebsfläche; wobei sich die Ladungseinheiten zwischen der Anordnung aus der Werkzeug-Vorrichtung und dem Fahrzeug befinden und sich das erste Fahrzeug in einem Abstand von der Werkzeug-Vorrichtung befindet,

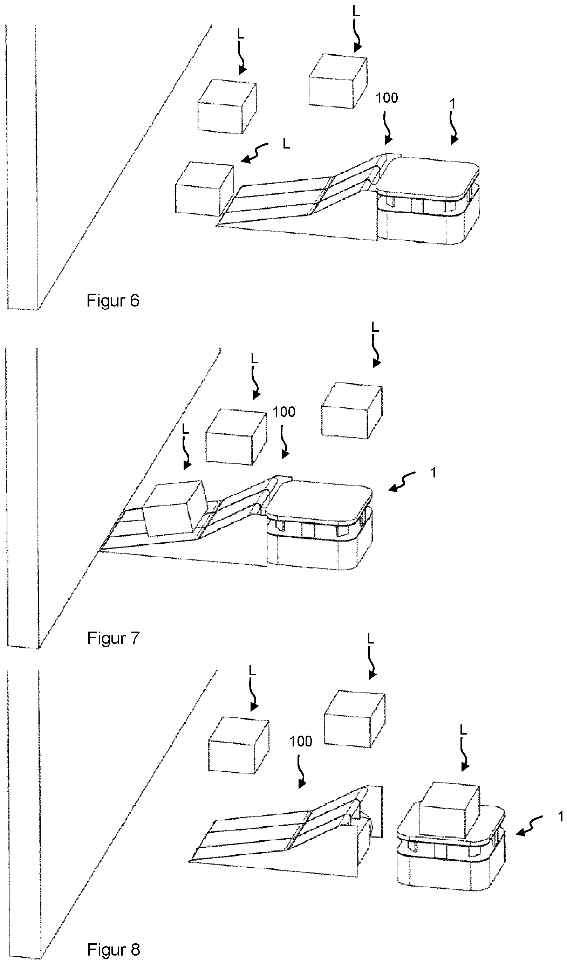

Figur 6 eine gegenüber der Betriebskonstellation der Figur 5 veränderte Betriebskonstellation, bei der sich das Fahrzeug der Werkzeug-Vorrichtung angenähert und das Fahrzeug zu einer ersten der drei Ladungseinheiten hin manövriert hat,
Figur 7 eine gegenüber der Betriebskonstellation der Figur 6 veränderte Betriebskonstellation, bei der gegenüber der Betriebskonstellation der Figur 6 das erste Fahrzeug die Werkzeug-Vorrichtung zusammen mit der ersten Ladungseinheit zur Begrenzungswand hin bewegt hat und die Werkzeug-Vorrichtung die erste Ladungseinheit auf einer Fördervorrichtung derselben aufgenommen hat,
Figur 8 eine gegenüber der Betriebskonstellation der Figur 7 veränderte Betriebskonstellation, bei der gegenüber der Betriebskonstellation der Figur 7 die erste Ladungseinheit durch die Werkzeug-Vorrichtung auf ein Aufnahmebauteil des ersten Fahrzeugs aufgeladen worden ist und sich das erste Fahrzeug wieder von der Werkzeug-Vorrichtung weg bewegt hat,

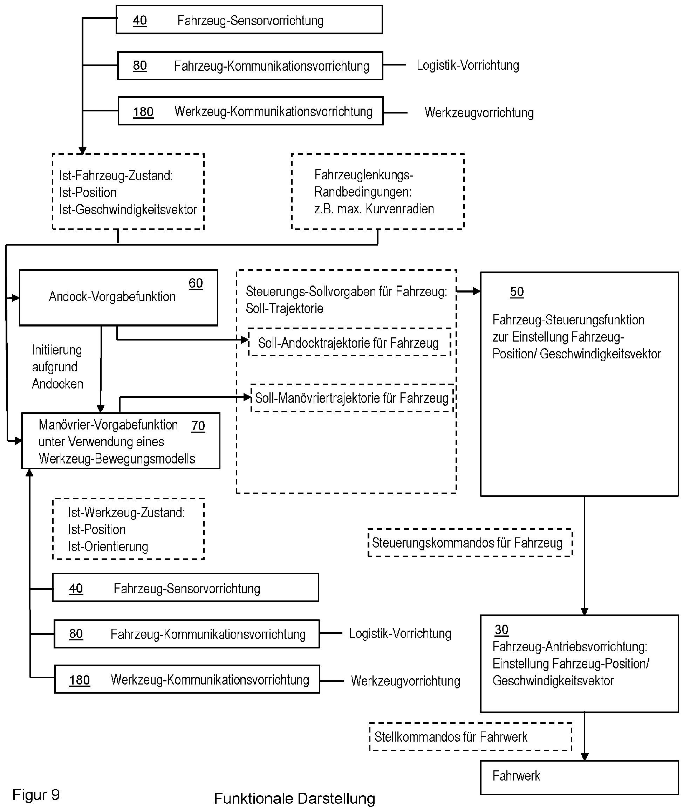

Figur 9 eine funktionale Darstellung einer Ausführungsform des erfindungsgemäßen Fahrzeugs und des erfindungsgemäßen Verfahrens,

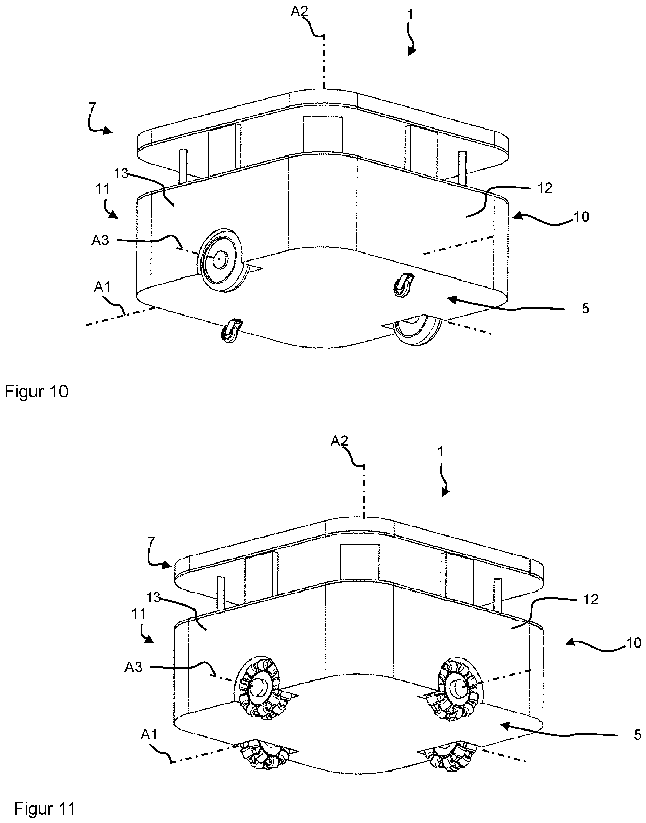

Figur 10 eine perspektivische Darstellung einer erfindungsgemäßen Ausführungsform des Fahrzeugs, wobei das Fahrzeug ein Fahrwerk mit vier Rädern aufweist, von denen zwei erste Räder in ihrer Kombination als Differential-Drehräder ausgebildet sind, und von denen zwei weitere Räder jeweils als Stützräder ausgebildet sind, und
Figur 11 eine perspektivische Darstellung einer erfindungsgemäßen Ausführungsform des Fahrzeugs, wobei das Fahrzeug ein Fahrwerk mit vier Rädern aufweist, die in ihrer Kombination als omni-direktionale Räder ausgebildet sind.

An Hand der Figur 1 wird eine Ausführungsform des erfindungsgemäßen Fahrzeugs 1 sowie des erfindungsgemäßen Verfahrens und Varianten desselben beschrieben. An Hand dieser Figur sowie auch an Hand weiterer Figuren werden dazu weitere alternative Ausführungsformen mit Merkmalen beschrieben, die sich von den an Hand der Figur 1 beschriebenen Merkmalen unterscheiden. Dabei können die Merkmale, durch die sich die weiteren alternativen Ausführungsformen von den Varianten unterscheiden, erfindungsgemäß auch an allen hierin beschriebenen Ausführungsformen vorhanden sein, und zwar sowohl als Alternative zu funktionsgleichen oder funktionsähnlichen Merkmalen als auch als zusätzliche Merkmale.

Das erfindungsgemäße Fahrzeug 1 kann selbst-steuernd, also ohne manuelle Steuerung, fahren und insbesondere mittels entsprechender erfindungsgemäß vorgesehenen Funktionen selbst-steuernd zumindest eine vorgegebene Missionsaufgabe erfüllen oder eine Abfolge von Missionsaufgaben erfüllen. Eine vorbestimmte Missionsaufgabe beinhaltet eine Annäherung des Fahrzeugs 1 an eine Werkzeug-Vorrichtung bis zum Andocken an derselben auf Basis einer Soll-Andocktrajektorie und anschließend ein Manövrieren des Fahrzeugs 1 auf der Basis einer Fahrzeug-Manövriertrajektorie zusammen mit der Werkzeug-Vorrichtung derart, dass die Werkzeug-Vorrichtung eine Ladungseinheit aufnehmen und insbesondere auf das Fahrzeug und dabei speziell auf ein Aufnahmebauteil des Fahrzeugs befördern kann. Infolge dessen erfolgt eine Übertragung der Ladungseinheit auf das Fahrzeug.

In der Figur 1 ist beispielartig ein Bezugssystem für das Fahrzeug 1 eingetragen, wie es auch für die erfindungsgemäß verwendeten Funktionen definiert sein kann. In der Figur 1 sind für das Fahrzeug 1 beispielartig eine Längsachse A1, eine Vertikalachse A2 und eine Querachse A3 eingetragen. Insbesondere kann vorgesehen sein, dass diese Achsen A1, A2, A3 in einem Punkt des Fahrzeugs 1 zusammenlaufen, der als Zentrum des Fahrzeugs 1 definiert ist. Als Zentrum des Fahrzeugs 1 kann auch ein anderer Punkt definiert sein. Insbesondere kann eine Mittellinie als Längsachse A1 des Fahrzeugs 1 sein. Beispielsweise können diese Definitionen für die erfindungsgemäß verwendeten Funktionen definiert sein kann. Beispielsweise sind bei diesen Funktionen Angaben zu Position oder Geschwindigkeit oder sowohl Position als auch zur Geschwindigkeit des Fahrzeugs 1 auf ein solches Zentrum des Fahrzeugs 1 bezogen. Diese Definitionen können für die erfindungsgemäß verwendeten Funktionen einzeln oder in jeder Kombination vorgenommen sein.

Wie auch in der Figur 1 gezeigt ist, weist das Fahrzeug 1 ein Fahrwerk 5, das die Richtung des Fahrzeugs 1 auf einer Betriebsfläche E einstellt, und einen an diesem befestigten Fahrzeug-Rahmen 10 auf. Der Fahrzeug-Rahmen 10 weist ein Aufnahmebauteil 7 auf, auf das zumindest eine Ladungseinheit L aufgelegt werden kann. Das Fahrzeug 1 kann mit einer auf der Betriebsfläche E positionierten Werkzeug-Vorrichtung 100 zusammenwirken, insbesondere wenn das Fahrzeug 1 an der Werkzeug-Vorrichtung 100 angedockt ist. Der Fahrzeug-Rahmen 10 kann auch aus einem Basisteil 8 und dem Aufnahmebauteil 7 gebildet sein, wobei das Aufnahmebauteil 7 an dem Basisteil 8 befestigt ist und insbesondere entgegen der Schwerkraftrichtung oberhalb des Basisteils 8 gelegen sein kann. Weiterhin kann das Aufnahmebauteil 7 eine Aufnahmefläche 9 aufweisen, die entgegen der Schwerkraftrichtung orientiert ist. Eine solche Aufnahmefläche 9 ist zum Auflegen zumindest einer Ladungseinheit L vorgesehen.

Der Fahrzeug-Rahmen 10 weist eine Außenfläche 10a auf, die zumindest abschnittsweise entlang der planaren Erstreckung der Betriebsfläche E orientiert ist.

Das Fahrzeug 1 weist zumindest eine Fahrzeug-Anlagefläche auf und kann mehrere Fahrzeug-Anlageflächen aufweisen, mit denen das Fahrzeug 1 an einer Werkzeug-Andockvorrichtung 101 in Anlage gebracht werden kann. Bei der in der Figur 1 dargestellten Ausführungsform des Fahrzeugs 1 weist der Fahrzeug-Rahmen 10 vier Anlageflächen 11, 12, 13, 14 auf. Eine Anlagefläche des Fahrzeug-Rahmens 10 kann hierin jede Fläche des Fahrzeugs 1, insbesondere eine Fläche mit einer Orientierung, die entlang der Flächenerstreckung der Betriebsfläche E verläuft, sein.

Die erfindungsgemäß vorgesehene Werkzeug-Andockvorrichtung 101 ist an einer entlang der Betriebsfläche E orientierten Außenfläche der Werkzeug-Vorrichtung 100 ausgebildet. In der Figur 1 ist beispielartig eine für die Werkzeug-Vorrichtung 100 eine Längsachse B1, eine Vertikalachse B2 und eine Querachse B3 eingetragen. Insbesondere kann vorgesehen sein, dass diese Achsen A1, A2, A3 in einem Punkt der Werkzeug-Vorrichtung 100 zusammenlaufen, der als Zentrum des Fahrzeugs 1 definiert ist. Als Zentrum der Werkzeug-Vorrichtung 100 kann auch ein anderer Punkt definiert sein. Insbesondere kann eine Mittellinie als Längsachse B1 der Werkzeug-Vorrichtung 100 sein. Beispielsweise können diese Definitionen für die erfindungsgemäß verwendeten Funktionen definiert sein kann. Beispielsweise sind bei diesen Funktionen Angaben zu Position oder Geschwindigkeit oder sowohl Position als auch zur Geschwindigkeit der Werkzeug-Vorrichtung 100 auf ein solches Zentrum der Werkzeug-Vorrichtung 100 bezogen. Diese Definitionen können für die erfindungsgemäß verwendeten Funktionen einzeln oder in jeder Kombination vorgenommen sein.

Unter "Andocken" im ersten Schritt wird hierin generell eine mechanische Verbindung zwischen dem Fahrzeug 1 und der Werkzeug-Vorrichtung 100 verstanden, mit der das Fahrzeug 1 die Werkzeug-Vorrichtung 100 manövrieren kann, d.h. Fahrzeug-Bewegungen auf die Werkzeug-Vorrichtung 100 zu übertragen, so dass die Bewegungen der Werkzeug-Vorrichtung 100 auf der Betriebsfläche E ausschließlich oder mehr oder weniger von den Bewegungen des Fahrzeugs 1 veranlasst oder geführt sind. Dabei kann insbesondere vorgesehen sein, dass die Werkzeug-Vorrichtung 100 keinen Antrieb hat, mit der die Werkzeug-Vorrichtung 100 sich selbst auf der Betriebsfläche E in Bewegung versetzen könnte, oder dass sich eine optional vorhandene Antriebsvorrichtung in einem antriebslosen Betriebszustand befindet.

Unter "Andocken" kann insbesondere das Anlegen einer Außenfläche einer der Anlageflächen 11, 12, 13, 14 oder eine vorbestimmte Anlagefläche der Anlageflächen 11, 12, 13, 14 des Fahrzeugs 1 an einer Außenfläche der Werkzeug-Vorrichtung 100 und insbesondere einer vorbestimmten Werkzeug-Andockvorrichtung 101, sofern diese vorbestimmt ist, verstanden werden.

Das Fahrzeug 1 weist eine am Fahrzeugrahmen 10 angeordnete Antriebsvorrichtung 30 mit mindestens einem Motor und optional zusätzlich einer Bremsvorrichtung auf. Die Antriebsvorrichtung 30 ist mit dem Fahrwerk 5 gekoppelt und treibt das Fahrwerk an, um die Geschwindigkeit und Richtung des Fahrzeugs 1 einzustellen. Insbesondere weist das Fahrwerk 5 eine Mehrzahl von Rädern auf, die jeweils in einer Radaufhängung des Fahrwerks 5 gelagert sind und auf denen das Fahrzeug 1 auf der Betriebsfläche E bewegbar und positionierbar ist. Dabei weist das Fahrwerk 5 zumindest zwei Räder auf. Die Antriebsvorrichtung treibt dabei zumindest ein Rad dieser Räder des Fahrwerks 5 an und ist zu diesem Zweck mit dem jeweiligen des zumindest einen Rad gekoppelt.

Beispielsweise können die Radaufhängungen von jeweils zwei Rädern kardanisch gelagert sein, so dass die jeweils zwei Räder von jeweils einer Lenkvorrichtung des Fahrwerks 5, die mit den Radaufhängungen der zwei Räder gekoppelt ist und mit der Antriebsvorrichtung in Verbindung steht, zusammen jeweils um eine quer zu den Drehachsen verlaufenden Drehachse gedreht werden können. Aufgrund von entsprechenden Stellkommandos, die von der Antriebsvorrichtung erzeugt und an das Fahrwerk 5 des Fahrzeugs 1 übermittelt werden, wird eine vorbestimmte Fahrtrichtung und Geschwindigkeit des Fahrzeugs 1 eingestellt. Insbesondere kann aufgrund von entsprechenden Stellkommandos, die von der Antriebsvorrichtung erzeugt und an das Fahrwerk 5 übermittelt werden, eine vorbestimmte Fahrtrichtung des Fahrzeugs 1 eingestellt werden. Bei diesen Ausführungsformen des Fahrzeugs 1 kann z.B. vorgesehen sein, dass zwei Räder oder zwei Paare von Rädern von insgesamt vier oder mehr als vier Rädern Lenkbewegungen ausführen können. Figur 10 zeigt eine perspektivisch Darstellung einer erfindungsgemäßen Ausführungsform des Fahrzeugs, wobei das Fahrzeug ein Fahrwerk mit vier Rädern aufweist, von denen zwei erste Räder, die jeweils in Bezug auf eine Längsachse des Fahrzeugs einander gegenüber liegend angeordnet sind, in ihrer Kombination als Differential-Drehräder ausgebildet sind, und von denen zwei weitere Räder, die in der Längsachse gesehen zwischen den zwei ersten Rädern und jeweils in Bezug auf eine Querachse des Fahrzeugs einander gegenüber liegend angeordnet sind und als Stützräder ausgebildet sind, und figur 11 zeigt eine perspektivische Darstellung einer erfindungsgemäßen Ausführungsform des Fahrzeugs, wobei das Fahrzeug ein Fahrwerk mit vier Rädern aufweist, die als omni-direktionale Räder ausgebildet sind.

Dementsprechend können die Radaufhängungen und Räder des Fahrzeugs 1 auch derart ausgeführt sein, dass die Räder des Fahrzeugs 1 als omni-direktionale Räder des Fahrwerks realisiert sind. Das Fahrzeug 1 in der Ausführungsform mit omni-direktionalen Rädern kann von einer aktuellen Position aus in jede Fahrtrichtung bewegt werden, sofern sich in dieser Hinsicht keine Hindernisse auf der Fahrauflage befinden. Dazu kann das Fahrwerk 5 des Fahrzeugs 1 eine Lenkvorrichtung aufweisen, die mit jeder der Radaufhängungen jeweils eines Rads zur Einstellung der Drehrichtung jedes Rads gekoppelt ist und mit der Antriebsvorrichtung in Verbindung steht. Aufgrund von entsprechenden Stellkommandos, die von der Antriebsvorrichtung erzeugt und an das Fahrwerk 5 des Fahrzeugs 1 übermittelt werden, wird eine vorbestimmte Fahrtrichtung und Geschwindigkeit des Fahrzeugs 1 eingestellt, wobei insbesondere zur Einstellung der Richtung des Fahrzeugs 1 die entsprechenden Stellkommandos an die Lenkvorrichtung übermittelt werden.

Weiterhin weist das Fahrzeug eine Steuerungsfunktion 50 auf, die funktional mit der Antriebsvorrichtung in Verbindung steht und aufgrund von Steuerungs-Sollvorgaben Steuerungskommandos ermittelt und diese an die Antriebsvorrichtung 30 übermittelt. Die Antriebsvorrichtung 10 erzeugt aus den Steuerungs-Sollvorgaben Stellkommandos oder Stellsignale an das Fahrwerk, um die Räder des Fahrzeugs 1 anzutreiben und das Fahrzeug 1 in entsprechender Weise auf der Betriebsfläche zu bewegen und aufgrund eines Fahrzeug-Ist-Zustands des Fahrzeugs 1 einen Fahrzeug-Soll-Zustand des Fahrzeugs 1 auf der Betriebsfläche E einzustellen.

Nach der Erfindung befindet sich in einem Ausgangzustand, der beispielartig in der Figur 1 gezeigt ist, zumindest ein Fahrzeug 1 in einem ersten Fahrzeug-Ist-Zustand in einem Ausgangzustand-Abstand zu einer Werkzeug-Vorrichtung 100, die sich in einem Werkzeug-Ist-Zustand befindet. Der Ausgangzustand-Abstand kann sich insbesondere aus vorherigen Bewegungen des Fahrzeugs 1 ergeben. Der Ausgangzustand-Abstand kann insbesondere als der Abstand zwischen einem vordefinierten Zentrum des Fahrzeugs 1 und einem vordefinierten Zentrum oder einer Referenzstelle der Werkzeug-Vorrichtung 100 definiert sein. Die Referenzstelle der Werkzeug-Vorrichtung 100 kann eine beliebige Stelle der Werkzeug-Vorrichtung 100 oder außerhalb der Werkzeug-Vorrichtung 100 sein, wobei die Referenzstelle fix also unveränderlich in einem werkzeugvorrichtungs-festen Koordinatensystem gelegen ist. Die Referenzstelle der Werkzeug-Vorrichtung 100 kann insbesondere ein Bereich wie z.B. ein Oberflächenbereich oder ein Punkt wie z.B. ein Oberflächenpunkt der Werkzeug-Vorrichtung 100 sein. Der Ausgangzustand-Abstand kann sich jedoch auch auf andere Punkte oder Stellen des Fahrzeugs 1 und der Werkzeug-Vorrichtung 100 beziehen. Beispielsweise kann der Ausgangzustand-Abstand als der Abstand zwischen dem Flächenmittelpunkt einer für das Andocken vorgesehenen Anlagefläche des Fahrzeugs 1 und dem Flächenmittelpunkt einer für das Andocken vorgesehenen Anlagefläche der Andockvorrichtung 101 der Werkzeug-Vorrichtung 100 definiert sein.

Das Fahrzeug 1 bewegt sich in dem vorgenannten ersten Schritt von dem Ausgangzustand mit dem Fahrzeug-Ist-Zustand zu einem ersten Fahrzeug-Soll-Zustand oder Soll-Andockzustand, in dem das Fahrzeug 1 in vorbestimmter Weise an der Werkzeug-Vorrichtung 100 angedockt ist. In einem zweiten Schritt erfolgt ein Manövrieren der Werkzeug-Vorrichtung 100 von ihrem Werkzeug-Ist-Zustand in einen Werkzeug-Soll-Zustand aufgrund von Bewegungen des Fahrzeugs 1, die aufgrund von Stellkommandos der Steuerungsfunktion 50 bewirkt werden. Die Bewegungen des Fahrzeugs 1 versetzen dieses im zweiten Schritt von dem ersten Fahrzeug-Soll-Zustand in einen zweiten Fahrzeug-Soll-Zustand oder Soll-Aufnahmezustand, wobei die Bewegungen des Fahrzeugs 1 aufgrund von Steuerungskommandos bewirkt werden, die die Steuerungsfunktion 50 des Fahrzeugsystems S erzeugt und von dieser an die Fahrzeug-Antriebsvorrichtung übermittelt werden, so dass diese in einer Weise betätigt wird, dass die erfindungsgemäßen Bewegungen des Fahrzeugs 1 ausgeführt werden.

Zur Veranschaulichung des genannten ersten Schritts und des genannten zweiten Schritts sind in der Figur 1 beispielsweise ein erstes Fahrzeug 1, ein zweites Fahrzeug 2 und eine Werkzeug-Vorrichtung 100 sowie drei Ladungseinheiten L1, L2, L3 jeweils auf einer Betriebsfläche E dargestellt. Das erste Fahrzeug 1 befindet sich in einem Fahrzeug-Ist-Zustand und ist dabei in einem Abstand zu der Werkzeug-Vorrichtung 100 positioniert, so dass das erste Fahrzeug 1 eine Wegstrecke entlang einer Soll-Andocktrajektorie in den Soll-Andockzustand als den genannten ersten Fahrzeug-Soll-Zustand zurücklegen muss, bei dem ein Abschnitt der Außenfläche 10a des Fahrzeug-Rahmens 10 mit einer vorbestimmten Werkzeug-Anlagefläche der Andockvorrichtung 101 der Werkzeug-Vorrichtung 100 in mechanischer Verbindung steht.

Die mechanische Verbindung kann insbesondere ein gegenseitiges Anlegen einer Außenseite und insbesondere einer der Anlageflächen 11, 12, 13, 14 des Fahrzeug-Rahmens 10 an die Werkzeug-Anlagefläche oder Andockvorrichtung 101 sein. Auch kann die mechanische Verbindung insbesondere ein Ankoppeln der Außenseite des Fahrzeug-Rahmens 10 an der Werkzeug-Anlagefläche der Andockvorrichtung 101 z.B. mittels einer Kopplungsvorrichtung sein. Die Kopplungsvorrichtung kann magnetisch oder mit einer Anhängerkupplung realisiert sein. Das erste Fahrzeug 1 und das zweite Fahrzeug 2 können jeweils insbesondere in der derselben Ausführungsform oder in zueinander unterschiedlichen Ausführungsformen des erfindungsgemäßen Fahrzeugs realisiert sein.

Der Zustand von Fahrzeug 1 und Werkzeug-Vorrichtung 100 nach dem ersten Schritt, bei dem sich das Fahrzeug 1 im Soll-Andockzustand an der Werkzeug-Vorrichtung 100 befindet, ist in der Figur 2 gezeigt. Der Zustand von Fahrzeug 1 und Werkzeug-Vorrichtung 100 nach dem zweiten Schritt, in dem das Fahrzeug 1, in einem an der Werkzeug-Vorrichtung 100 andockten Zustand, die Werkzeug-Vorrichtung 100 von dem genannten Werkzeug-Ist-Zustand in einen Werkzeug-Soll-Zustand manövriert hat, ist in der Figur 3 gezeigt. In diesem Zustand befinden sich das Fahrzeug 1 in dem Soll-Andockzustand und die Werkzeug-Vorrichtung 100 in einem einander angedockten Zustand. Dabei hat die Werkzeug-Vorrichtung 100 eine Position und eine Ausrichtung auf der Betriebsfläche E, bei dem die Werkzeug-Vorrichtung 100 eine Ladungseinheit L aufnehmen kann. Insbesondere kann vorgesehen sein, dass der Werkzeug-Soll-Zustand derart definiert und vorgegeben ist, dass die Referenzstellen-Position der Referenzstelle der Werkzeug-Vorrichtung 100 innerhalb einer Soll-Differenz zu einer Ladungseinheit-Position der Ladungseinheit L gelegen ist. Zusätzlich oder alternativ dazu kann für den Werkzeug-Soll-Zustand definiert und vorgegeben sein, dass die Ausrichtung der Werkzeug-Vorrichtung 100 derart realisiert ist, dass die Ladungseinheit-Position der Ladungseinheit L eindeutig bestimmt ist und dass die Ladungseinheit L relativ zur Ausrichtung der Werkzeug-Vorrichtung 100 in einem Soll-Relativbereich insbesondere in Bezug auf eine Mittelachse der Werkzeug-Vorrichtung 100 gelegen ist. In diesen Fällen ist der Werkzeug-Soll-Zustand für eine jeweilige Ausführungsform der Werkzeug-Vorrichtung 100 derart definiert, dass die Ladungseinheit L von der Werkzeug-Vorrichtung 100 aufnehmbar und von dieser auf das Fahrzeug 1 befördert werden kann.

Wenn das Fahrzeug 1 die Werkzeug-Vorrichtung 100 in dessen Werkzeug-Soll-Zustand bewegt hat, befindet sich das Fahrzeug 1 gleichzeitig in einem Soll-Aufnahmezustand, so dass die Werkzeug-Vorrichtung 100, an der das Fahrzeug 1 angedockt ist, eine Ladungseinheit L auf das Aufnahmebauteil 7 befördern kann.

Das Fahrzeug 1 oder dessen Fahrzeugsystem S weist eine Andock-Vorgabefunktion 60 zur Definition einer Soll-Andocktrajektorie für das Fahrzeug 1 zur Bewegung desselben von dessen Fahrzeug-Ist-Zustand in den Soll-Andockzustand an einer Werkzeug-Vorrichtung 100 auf. Für den Fall, dass die Position des Fahrzeugs 1 einen Abstand, der dem Betrag nach ungleich Null ist, oder einen Mindestabstand zur Position der Werkzeug-Vorrichtung 100 hat und das Fahrzeug 1 in den ersten Fahrzeug-Soll-Zustand oder Soll-Andockzustand bewegt werden soll, ermittelt die Andock-Vorgabefunktion 60 eine Soll-Andocktrajektorie zur Bewegung des Fahrzeugs 1 von dem momentanen Fahrzeug-Ist-Zustand zu dem Soll-Andockzustand des Fahrzeugs 1. Die Soll-Andocktrajektorie wird auf Basis eines jeweils momentanen Fahrzeug-Ist-Zustands des Fahrzeugs 1, der zumindest durch eine Ist-Position und optional zusätzlich einen Ist-Geschwindigkeitsvektor definiert ist, und auf Basis eines momentanen Werkzeug-Ist-Zustands der Werkzeug-Vorrichtung 100, der durch eine Werkzeug-Ist-Position und optional zusätzlich einen Werkzeug-Ist-Geschwindigkeitsvektor oder optional zusätzlich einer Werkzeug-Ist-Ausrichtung der Werkzeug-Vorrichtung 100 definiert ist, ermittelt. Davon unabhängig kann der Soll-Andockzustand des Fahrzeugs 1 auch vorbestimmt, oder vorgeben oder von einer externen Vorrichtung wie insbesondere einer im Betriebsbereich stationären Logistik-Vorrichtung an das Fahrzeugsystem S übermittelt worden sein. Dabei führt die Soll-Andocktrajektorie von dem Fahrzeug-Ist-Zustand des Fahrzeugs 1 zu dem Soll-Andockzustand des Fahrzeugs 1.

Der Soll-Andockzustand des Fahrzeugs 1 ist insbesondere durch eine Soll-Position und optional zusätzlich eine Soll-Andockrichtung, insbesondere als Komponente des Soll-Geschwindigkeitsvektors des Fahrzeugs 1 definiert. Bei bestimmten Ausführungsformen des Fahrzeugs 1 kann die Soll-Andockrichtung als Bestimmung für den Soll-Andockzustand des Fahrzeugs 1 entfallen, z.B. wenn der Fahrzeug-Rahmen 10 in geeigneter Weise gestaltet ist. Insbesondere kann hierzu der Fahrzeug-Rahmen 10 derart gestaltet sein, dass dieser Anlageflächen aufweist, die über den Außenumfang des Fahrzeug-Rahmens 10 des Fahrzeugs 1 verteilt ist. Die Soll-Andockrichtung des Fahrzeugs 1 kann derart vorgesehen sein, dass das Fahrzeug 1 dieselbe Ausrichtung wie die Werkzeug-Vorrichtung 100 hat oder zumindest eine Ausrichtung hat, bei der die Soll-Ausrichtung des Fahrzeugs 1 und die Ist-Ausrichtung der Werkzeug-Vorrichtung 100 betragsmäßig einen Winkel zwischen 0 Grad und 60 Grad und insbesondere 0 Grad und 45 Grad zueinander einnehmen. Die Ist-Ausrichtung der Werkzeug-Vorrichtung 100 im Soll-Andockzustand kann insbesondere nach einem oder mehreren der folgenden Definitionen vorgesehen sein:
(SA1) dass die Soll-Richtung des Fahrzeugs 1 und die Ist-Richtung der Werkzeug-Vorrichtung 100 übereinstimmen;
(SA2) dass sich die Soll-Position des Fahrzeugs 1 und die Ist-Position der Werkzeug-Vorrichtung 100 um den Abstand zwischen den die Positionen von Fahrzeug 1 und Werkzeug-Vorrichtung 100 bestimmenden Referenzpunkte in einer Richtung in oder entlang der Orientierung der Anlagefläche der Andockvorrichtung 101 unterscheiden.

Das Fahrzeug 1 oder dessen Fahrzeugsystem S weist erfindungsgemäß weiterhin eine Steuerungsfunktion 50 auf, die funktional mit der Andock-Vorgabefunktion 60 in Verbindung steht und Steuerungs-Sollvorgaben ermittelt und diese an die Antriebsvorrichtung übermittelt, um den Geschwindigkeitsvektor, also die Geschwindigkeit und optional zusätzlich die Ausrichtung des auf der Betriebsfläche E befindlichen Fahrzeugs 1 derart einzustellen, dass sich das Fahrzeug 1 entlang der Soll-Andocktrajektorie bewegt. Insbesondere bei einem Fahrwerk 5 mit omni-direktionalen Rädern ist es nicht erforderlich, dass die Ausrichtung des Fahrzeugs 1 zur Ermittlung der Soll-Andocktrajektorie verwendet wird.

Generell kann die Steuerungsfunktion 50 derart realisiert sein, dass die Steuerungs-Sollvorgaben in zeitlichen Abständen zu jeweils einem Zeitpunkt, in dem das Fahrzeug 1 eine jeweilige Ist-Position und optional eine jeweilige Ausrichtung oder einen jeweiligen Ist-Geschwindigkeitsvektor hat, in Bezug auf einen der jeweiligen Ist-Position jeweils zugeordneten Punkt der jeweiligen Trajektorie und z.B. der Soll-Andocktrajektorie, in Form von Steuerungskommandos an die Antriebsvorrichtung erzeugt werden, wobei mit den die Steuerungs-Sollvorgaben für das Fahrzeug 1 eine Differenz zwischen der jeweiligen Position und dem zugeordneten Punkt der jeweiligen Trajektorie und z.B. der Soll-Andocktrajektorie sowie eine Differenz zwischen der jeweiligen Ausrichtung oder einen jeweiligen Ist-Geschwindigkeitsvektor und der Tangente an dem zugeordneten Punkt der jeweiligen Trajektorie und z.B. der Soll-Andocktrajektorie verringert werden. Diese Verringerung kann mit einer Regelfunktion der Steuerungsfunktion 50, die gegebenenfalls funktional mit der Steuerungsfunktion in Verbindung stehen kann und die Steuerungskommandos zur Minimierung des Abstands zwischen der momentanen Ist-Position des Fahrzeugs 1 und einem dieser Ist-Position jeweils zugeordneten Punkt der jeweiligen Trajektorie und z.B. der Soll-Andocktrajektorie erfolgen.

Nach einer Ausführungsform des Fahrzeugs 1 weist das Fahrzeugsystem S des Fahrzeugs 1 eine Sensorvorrichtung 40 auf, die den Ist-Zustand des Fahrzeugs 1 und insbesondere die Ist-Position und optional die Ist-Ausrichtung oder optional den Ist-Geschwindigkeitsvektor des Fahrzeugs 1 ermittelt und an die Steuerungsfunktion 50 übermittelt und somit dieser bereitstellt. Die Sensorvorrichtung 40 kann auch funktionaler Bestandteil des Fahrzeugsystems S sein. Zu diesem Zweck kann die

Sensorvorrichtung 40 einen GPS-Sensor aufweisen. Alternativ oder zusätzlich kann die Sensorvorrichtung 40 eine Kamera oder optischen Sensor aufweisen, die Markierungen im Betriebsberiech und insbesondere auf der Betriebsfläche E erfasst und aus diesen Informationen die Ist-Position und optional die Ist-Ausrichtung oder optional den Ist-Geschwindigkeitsvektor des Fahrzeugs 1 ermittelt.

Zur Ermittlung oder Identifizierung der jeweiligen Ist-Position und optional der jeweiligen Ist-Ausrichtung oder optional des Ist-Geschwindigkeitsvektors des Fahrzeugs 1 kann bei den Ausführungsformen des erfindungsgemäßen Fahrzeugs 1 oder Verfahrens, in Kombination mit ansonsten jeder hierin beschriebenen erfindungsgemäßen Varianten des Fahrzeugs 1 vorgesehen sein, dass die Steuerungsfunktion 50 eine Fahrzeug-Kommunikationsvorrichtung 80 aufweist, die mit einer im Betriebsbereich stationären Logistik-Vorrichtung oder Zentralsteuerung in Funkverbindung gebracht werden kann und dabei eine oder mehrere der folgenden Daten empfängt:
(d1) Daten, die eine Ist-Position zumindest eines erfindungsgemäßen Fahrzeugs 1 definieren,
(d2) Daten, die eine Soll-Position zumindest eines erfindungsgemäßen Fahrzeugs 1 definieren,
(d3) Daten, die eine Ist-Ausrichtung zumindest eines erfindungsgemäßen Fahrzeugs 1 definieren,
(d4) Daten, die eine Soll-Ausrichtung zumindest eines erfindungsgemäßen Fahrzeugs 1 definieren,
(d5) Daten, die eine Ist-Position zumindest einer erfindungsgemäß vorgesehenen Werkzeug-Vorrichtung 100 definieren,
(d6) Daten, die eine Ist-Ausrichtung zumindest einer erfindungsgemäß vorgesehenen Werkzeug-Vorrichtung 100 definieren,
(d7) Daten, die eine Soll-Position zumindest einer erfindungsgemäß vorgesehenen Werkzeug-Vorrichtung 100 definieren,
(d8) Daten, die eine Soll-Ausrichtung zumindest einer erfindungsgemäß vorgesehenen Werkzeug-Vorrichtung 100 definieren,
(d9) Daten, die eine Ist-Position zumindest einer erfindungsgemäß vorgesehenen Ladungseinheit L definieren.

Die Übermittlung von Daten durch die Zentralsteuerung oder Logistik-Vorrichtung an die Fahrzeug-Kommunikationsvorrichtung 80 kann insbesondere in regelmäßigen Zeitabständen oder unregelmäßig, dabei insbesondere in Abhängigkeit anderer Prozesse, oder auf Anfrage durch die Steuerungsfunktion 50 oder die Fahrzeug-Kommunikationsvorrichtung 80 erfolgen. Die Logistik-Vorrichtung ist insbesondere in einem Bereich angeordnet, von dem aus die Logistik-Vorrichtung Funk-Kontakt zu dem zumindest einem erfindungsgemäßen Fahrzeug hat, das sich auf der Betriebsfläche E insbesondere entlang einer Soll-Trajektorie bewegt.

Nach einer Ausführungsform des Fahrzeugs 1 stehen der Steuerungsfunktion 50 die Daten (d5) und optional die Daten (d6), also die Ist-Position und optional die Ist-Ausrichtung der Werkzeug-Vorrichtung 100 zur Verfügung, um die Soll-Andocktrajektorie für das Fahrzeug 1 zu ermitteln. Bei den Ausführungsformen des erfindungsgemäßen Fahrzeugs kann, in Kombination mit ansonsten jeder hierin beschriebenen Varianten des Fahrzeugs vorgesehen sein, dass die Daten (d5) und optional die Daten (d6) ermittelt werden nach einer oder mehreren der folgenden Optionen:
- von der Logistik-Vorrichtung, wobei diese die Daten (d5), (d6) an die Kommunikationsvorrichtung 80 übermittelt,
- von der Sensorvorrichtung 40 des Fahrzeugs 1,
- von einer Sensorvorrichtung der Werkzeug-Vorrichtung 100, wobei diese die Daten (d5), (d6) an die Kommunikationsvorrichtung 80 übermittelt.

Die Ermittlung der Soll-Trajektorie, also z.B. der Soll-Andocktrajektorie oder der Fahrzeug-Manövriertrajektorie, aus dem Ist-Zustand der Werkzeug-Vorrichtung 100 und dem Ist-Zustands des Fahrzeugs 1 kann durch Verwendung und Anpassung einer vorgegebenen Trajektorie erfolgen. Beispielsweise kann die vorgegebene Trajektorie eine geradlinige Trajektorie, die die aktuelle Ist-Position des Fahrzeugs 1 und die aktuelle Ist-Position der Werkzeug-Vorrichtung 100 verbindet, zusätzlich mit einer Soll-Drehung des Fahrzeugs 1 zur Überführung der aktuellen Ist-Ausrichtung des Fahrzeugs 1 in die Ist-Ausrichtung der Werkzeug-Vorrichtung 100 sein. Die Steuerungsfunktion 50 kann dabei derart ausgeführt sein, dass das Fahrzeug 1 aufgrund der Steuerungskommandos beim Fahren unter Berücksichtigung der Restriktionen des Fahrwerks 5 des Fahrzeugs 1 und insbesondere der Lenkvorrichtung, wie z.B. des geringsten fahrbaren Kurvenradius, der Abstand zwischen der aktuellen Ist-Position des Fahrzeugs 1 und der Soll-Trajektorie zu jedem Zeitpunkt minimal ist.

Die Restriktionen des Fahrwerks 5 des Fahrzeugs 1 könnten insbesondere von der Art des Fahrwerks 5 abhängen. Beispielsweise sind diese bei einem Fahrwerk 5 mit omni-direktionalen Rädern anders als bei einem Fahrwerk 5 mit kardanisch lenkbaren Rädern.

Alternativ kann vorgesehen sein, dass die Soll-Trajektorie einen Verlauf hat, der bereits die Restriktionen oder Randbedingungen des Fahrwerks 5 des Fahrzeugs 1 berücksichtigt und insbesondere einen Kurvenverlauf hat, der von dem jeweiligen Fahrwerk 5 des Fahrzeugs 1 ausführbar ist. Dabei kann vorgesehen sein, dass die Trajektorien-Vorgabefunktion zumindest einen Funktionstyp für die Definition der Soll-Trajektorie, z.B. eine Polynomfunktion, abgespeichert hat, die durch Ist-Zustand des Fahrzeugs, Soll-Zustand des Fahrzeugs und eines Restriktions-Kriteriums, definiert wird. Als Restriktions-Kriterium kann eine oder mehrere der folgenden Restriktionen verwendet werden:
(r1) die mechanischen Grenzen der Fahrzeug-Lenkung,
(r2) das Gewicht des Fahrzeugs,
(r3) eine Energiebedingungen für die Bewegung des Fahrzeugs.

Die Steuerungs-Sollvorgaben können zusätzlich auch Geschwindigkeits-Sollvorgaben, also einen Geschwindigkeitsvektor enthalten. Die Steuerungs-Sollvorgaben können von der Steuerungsfunktion 50 derart ermittelt werden, dass der Zeitaufwand und Energieaufwand für die Bewegung des Fahrzeugs 1 von dessen aktuellem Ist-Zustand zu dem Anlegen an die Anlagefläche oder Andockvorrichtung 101 der Werkzeug-Vorrichtung 100 minimal sind.

Bei einer Weiterführung können die Steuerungskommandos insbesondere hinsichtlich der Geschwindigkeit des Fahrzeugs entlang der Soll-Andocktrajektorie die Bewegungen von anderen Fahrzeugen, z.B. in der Figur 1 die Bewegungen des zweiten Fahrzeugs 2, berücksichtigen.

Wenn das Fahrzeug 1 an der Werkzeug-Vorrichtung 100 angedockt ist, erzeugt eine Manövrier-Vorgabefunktion 70 des Fahrzeugs 1 eine Fahrzeug-Manövriertrajektorie und eine Referenzpunkt-Manövriertrajektorie für die Werkzeug-Vorrichtung 100, um die Werkzeug-Vorrichtung 100 von einem Werkzeug-Ist-Zustand in einen Werkzeug-Soll-Zustand zu manövrieren. Dabei wird das Fahrzeug 1 mittels der Steuerungsfunktion 50 entlang der Fahrzeug-Manövriertrajektorie bewegt und eine Referenzstelle der Werkzeug-Vorrichtung 100 entlang der Referenzpunkt-Manövriertrajektorie bewegt.

Die Referenzpunkt-Manövriertrajektorie verläuft von einer jeweiligen Ist-Position der vordefinierten Referenzstelle der Werkzeug-Vorrichtung 100 insbesondere zum Zeitpunkt des Andockens des Fahrzeugs 1 an die Werkzeug-Vorrichtung 100, bis zu einem Soll-Abstand zwischen der Referenzstelle und der Position der Ladungseinheit L, die jeweils auf das Aufnahmebauteil 7 des Fahrzeugs 1 bewegt werden soll.

Dabei kann vorgesehen sein, dass das Fahrzeug 1 die Daten (d9), die eine Ist-Position zumindest einer jeweils vorgesehenen Ladungseinheit L definieren, über die Kommunikationsvorrichtung 80 von dem Fahrzeug 1 empfangen werden und der Andock-Vorgabefunktion 60 bereitgestellt werden. Dabei kann vorgesehen sein, dass die Daten (d9) von der Logistik-Vorrichtung oder einer Sensor-Vorrichtung der Werkzeug-Vorrichtung 100 ermittelt werden und an die Manövrier-Vorgabefunktion 70 übermittelt oder dieser bereitgestellt werden.

Die Manövrier-Vorgabefunktion 70 weist ein Werkzeugbewegungs-Modell auf, das Angaben, die einen Werkzeugzustand mit einer Werkzeug-Ist-Position und einen Werkzeug-Ist-Geschwindigkeitsvektor eines Referenzpunkts der Werkzeug-Vorrichtung 100 definieren, in Angaben umrechnet, die eine Fahrzeug-Ist-Position und einen Fahrzeug-Ist-Geschwindigkeitsvektor definieren, wenn sich das Fahrzeug in einem an der Werkzeug-Vorrichtung 100 angedockten Zustand befindet.

Die Manövrier-Vorgabefunktion weist eine Manövriertrajektorien-Erzeugungsfunktion auf, die auf der Basis eines jeweiligen Werkzeug-Ist-Zustands die Referenzstelle-Manövriertrajektorie und in Abhängigkeit von dieser mit dem Werkzeugbewegungs-Modell eine Fahrzeug-Manövriertrajektorie in einen Soll-Aufnahmezustand des Fahrzeugs 1 ermittelt, entlang der das Fahrzeug 1 die Werkzeug-Vorrichtung 100 von einem Werkzeug-Ist-Zustand in einen Werkzeug-Soll-Zustand manövriert, und übermittelt die Fahrzeug-Manövriertrajektorie als Steuerungs-Sollvorgabe zum Bewegen des Fahrzeugs 1 entlang derselben.

Mit der Steuerungsfunktion 50 erfolgt die Bewegung des Fahrzeugs 1 und der Werkzeug-Vorrichtung 100, an der das Fahrzeug 1 angedockt ist, derart, dass der vorbestimmte Referenzpunkt der Werkzeug-Vorrichtung 100 im Werkzeug-Sollzustand der Werkzeug-Vorrichtung 100 in der Position relativ zu der Position der Ladungseinheit L liegt, bei der die Ladungseinheit L von der Werkzeug-Vorrichtung 100 mittels einer Aufnahmevorrichtung derselben aufgenommen und auf das Aufnahmebauteil 7 des Fahrzeugs 1, das an der Werkzeug-Vorrichtung 100 angedockt ist, bewegt werden kann. Bei der Erzeugung der Fahrzeug-Manövriertrajektorie werden die Randbedingungen des Fahrwerks 5 des Fahrzeugs 1 berücksichtigt, so dass das Fahrzeug 1 in der Lage ist, sich technisch entlang der Fahrzeug-Manövriertrajektorie bewegen zu können.

Die Werkzeug-Vorrichtung 100 ist hinsichtlich ihres Reibungsverhaltens relativ zur Betriebsfläche E derart auf der Betriebsfläche E gelegen, dass diese durch das Fahrzeug 1, wenn dieses an der Werkzeug-Vorrichtung 100 angedockt ist, die Werkzeug-Vorrichtung 100 auf der Betriebsfläche E bewegen oder verschieben und somit in einen Werkzeug-Soll-Zustand manövrieren kann. Dazu kann vorgesehen sein, dass die Werkzeug-Vorrichtung 100 auf der Betriebsfläche E gleitet und insbesondere dabei ohne Fahrwerk mit Rädern realisiert ist. Alternativ dazu kann vorgesehen sein, dass die Werkzeug-Vorrichtung 100 ein Fahrwerk mit Rädern aufweist, mit der die Werkzeug-Vorrichtung 100 auf der Betriebsfläche E bewegt werden kann. Die je nach Ausführungsform der Werkzeug-Vorrichtung 100 auf der Betriebsfläche E jeweils realisierbare Bewegung der Werkzeug-Vorrichtung 100 durch Gleiten auf der Betriebsfläche E oder durch Rollen mittels eines Fahrwerks ist dabei im Werkzeugbewegungs-Modell durch entsprechende Restriktionen für den Andockzustand berücksichtigt.

Die nach der Erfindung vorgesehene Werkzeug-Vorrichtung 100 ist als ein Förder-Werkzeug realisiert, das zur Aufnahme einer Ladungseinheit L von der Betriebsfläche E und zur Beförderung derselben auf das Aufnahmebauteil 7 des Fahrzeugs 1 und somit zur Übergabe der Ladungseinheit L an das Aufnahmebauteil 7 des Fahrzeugs 1 ausgeführt ist. Zu diesem Zweck kann die Werkzeug-Vorrichtung als Förder-Vorrichtung ein Förderband aufweisen, das von einer Antriebsvorrichtung der Werkzeug-Vorrichtung 100 antreibbar ist. Das Förderband ist derart in der Werkzeug-Vorrichtung 100 angeordnet, dass dieses in einem Förderabschnitt sich in seiner Längsrichtung in Bezug auf die Schwerkraftrichtung vertikal oder schräg nach oben erstreckt, so dass eine von der Förder-Vorrichtung oder Auflade-Vorrichtung aufgenommene Ladungseinheit L auf eine Höhe über der Betriebsfläche E, die mindestens die Höhe der Aufnahmefläche 9 des Aufnahmebauteils 7 des Fahrzeugs 1 im angedockten Zustand übersteigt, gefördert werden kann. Unter Förderabschnitt wird hierin der Abschnitt des Förderbands verstanden, der bei Bewegung des Förderbands entlang der Förderrichtung bewegt wird. Als Förderrichtung kann insbesondere diejenige Richtung definiert sein, die von einem Förderabschnitt-Anfang X1, der nahe oberhalb der Betriebsfläche E gelegen ist, zu einem Förderabschnitt-Ende X2 weist, der eine größere Höhe hat als der Förderabschnitt-Anfang X1. Somit kann der Förderabschnitt zumindest teilweise die Höhe der Aufnahmefläche 9 des Aufnahmebauteils 7 aufweisen, wenn das Fahrzeug 1 mit der Werkzeug-Andockvorrichtung 101 in Anlage ist. Nach einer Ausführungsform der Werkzeug-Vorrichtung 100 weist diese ein Förderband auf, dessen Förderabschnitt sich von der Betriebsfläche E bis zu einer Höhe erstreckt, die mindestens die Höhe hat, in der die Aufnahmefläche 9 über der Betriebsfläche E gelegen ist. Die Werkzeug-Vorrichtung 100 kann auch mehrere Förderbänder aufweisen, die quer zur Förderrichtung nebeneinander gelegen sind, so dass die Förderabschnitte der Förderbänder insgesamt eine flächigere Aufnahme für die Beförderung der Ladungseinheiten L bieten.

Die Förder-Vorrichtung kann auch mehrere Förderbänder aufweisen, die in ihrer Förderrichtung hintereinander gelegen sind. Diese Förderbänder können auch zueinander unterschiedliche Förderrichtungen haben. Insbesondere kann ein in der Förderrichtung hinter einem vorderen Förderband gelegenes Förderband eine größere Steigung haben, als das jeweils vordere Förderband.

In den Figuren 1 bis 8 ist jeweils eine Ausführungsform der Werkzeug-Vorrichtung 100 gezeigt, die eine erste Gruppe von drei quer zur Förderrichtung nebeneinander gelegenen Förderbändern F11, F12, F13 und eine zweite Gruppe von drei quer zur Förderrichtung nebeneinander gelegenen Förderbändern F21, F22, F23 aufweist. Die Förderbänder jeder der Gruppen weisen in etwa dieselbe Förderrichtung auf. Jedes Förderband der zweiten Gruppe ist in der Förderrichtung hinter jeweils einem Förderband der ersten Gruppe gelegen, wobei die Förderrichtung der Förderbänder der zweiten Gruppe eine größere Steigung hat als die Förderbänder der ersten Gruppe. Jedes Förderband ist von einer Antriebsvorrichtung der Werkzeug-Vorrichtung 100 angetrieben. Die Förderrichtungen der Förderbänder verlaufen in Bezug auf die Schwerkraftrichtung vertikal oder schräg nach oben, so dass eine von der Förder-Vorrichtung oder Auflade-Vorrichtung aufgenommene Ladungseinheit L einen Teilweg bei der Beförderung auf das Aufnahmebauteil 7 des Fahrzeugs 1 zurücklegt.

Die Förder-Vorrichtung kann alternativ dazu auch eine Greifvorrichtung mit einem Aufnahmeteil aufweisen, das sich bei Betätigung der Greifvorrichtung in vorbestimmter Weise bewegt, um eine auf der Betriebsfläche E befindliche Ladungseinheit L von der Betriebsfläche E auf das Aufnahmebauteil 7 des Fahrzeugs 1 zu fördern. Bei den Ausführungsformen der Förder-Vorrichtung oder Auflade-Vorrichtung ist die Referenzstelle der Werkzeug-Vorrichtung 100 vorzugsweise eine Stelle der Werkzeug-Vorrichtung 100, die an der Förder-Vorrichtung oder Auflade-Vorrichtung gelegen ist. Insbesondere ist die Position der Referenzstelle an der Werkzeug-Vorrichtung 100 in Bezug auf einen vorbestimmten Referenzpunkt der Werkzeug-Vorrichtung 100 definiert, wobei die Position der Referenzstelle insbesondere durch einen Abstand zu dem vorbestimmten Referenzpunkt der Werkzeug-Vorrichtung 100 definiert sein kann. Optional kann die Position der Referenzstelle zusätzlich oder alternativ dazu durch eine Richtung zu einer vorbestimmten Mittelachse der Werkzeug-Vorrichtung 100 definiert sein. Durch die Definition der Position der Referenzstelle ist mit dem Werkzeug-Soll-Zustand eine Soll-Relativposition der Werkzeug-Vorrichtung 100 und der jeweils von dieser zu fördernden Ladungseinheit L definiert, bei der die Ladungseinheit L von der Betriebsfläche E aufgenommen und gefördert werden kann.

Das Förderband kann sich auch vertikal erstrecken, d.h. der Abstand zwischen den zwei Umlenkabschnitten verläuft vertikal oder quer zur Erstreckung der Betriebsfläche E. In diesem Fall können auch zwei Förderbänder vorgesehen sein, die in einem Abstand und entlang zueinander und dabei insbesondere parallel zueinander verlaufen.

Jedes Förderband kann auch Förderplatten oder Förderteile aufweisen, die in Anlage zu der Ladungseinheit gebracht werden oder bewegt werden und die Ladungseinheit aufnehmen und dann auf die Höhe oder eine größere Höhe anheben als die Höhe der Aufnahmefläche 9 des Aufnahmebauteils 7 des Fahrzeugs auf der Betriebsfläche E. Dabei kann die Referenzstelle die Position der Förderplatten oder Förderteile an ihrer untersten Stellung bei Bewegung des Förderbandes definiert sein.

Die Werkzeug-Vorrichtung 100 kann einen Sensor zur Erfassung eines Ladungseinheit-Identifikationszeichens oder einer Ladungseinheit-Identifikationskennung aufweisen, das oder die an einer Stelle der Auflade-Vorrichtung angeordnet ist, um ein Identifikationszeichen oder eine Identifikationskennung, das oder die an einer von der Werkzeug-Vorrichtung 100 aufgenommenen Ladungseinheit L abgebildet ist, oder einen in diesen enthaltenen Identifikationscode, zu erkennen. Dabei kann vorgesehen sein, dass eine Werkzeug-Kommunikationsvorrichtung der Werkzeug-Vorrichtung 100 den Identifikationscode oder Daten, die aus dem Identifikationscode ermittelt werden, an die Logistik-Vorrichtung oder an die Kommunikationsvorrichtung 80 des Fahrzeugs 1 oder sowohl an die Logistik-Vorrichtung als auch an die Kommunikationsvorrichtung 80 übermittelt.

Alternativ oder zusätzlich kann das Fahrzeug 1 einen Sensor zur Erfassung einer Ladungseinheit-Identifikationskennung oder dergleichen aufweisen, der an einer Stelle des Aufnahmebauteils 7 angeordnet ist, um einen Identifikationscode oder dergleichen, der an einer von dem Aufnahmebauteil 7 aufgenommenen Ladungseinheit L abgebildet ist, zu erkennen. Dabei kann vorgesehen sein, dass der Sensor den Identifikationscode oder Daten, die aus dem Identifikationscode ermittelt werden, der Kommunikationsvorrichtung 80 des Fahrzeugs 1 bereitstellt und diese den Identifikationscode oder die Daten an die Logistik-Vorrichtung übermittelt.

Falls die Erkennung eines Identifikationscodes sowohl von der Werkzeug-Vorrichtung 100 als auch vom Fahrzeug 1 vorgenommen und gegebenenfalls ein erkannter Identifikationscode oder Daten, die aus dem Identifikationscode ermittelt wurden, an die Logistik-Vorrichtung übermittelt wird oder werden, kann von der Logistik-Vorrichtung eine verbesserte Überprüfung der jeweils auf das Aufnahmebauteil 7 gelegten Ladungseinheit L vorgenommen werden.

## Patentansprüche

1. Fahrzeug (1) mit einem Fahrwerk (5), mit einer Antriebsvorrichtung (30), die mit dem Fahrwerk (5) in Verbindung steht und die einen Geschwindigkeitsvektor des Fahrzeugs (1) auf einer Betriebsfläche einstellt, und mit einem an dem Fahrwerk (5) angeordneten Fahrzeug-Rahmen (10) mit einem Aufnahmebauteil (7) zum Auflegen zumindest einer auf der Betriebsfläche gelegenen Ladungseinheit (L), wobei das Fahrzeug (1) ein Fahrzeugsystem (S) aufweist mit:
einer Steuerungsfunktion (50), die funktional mit der Antriebsvorrichtung (30) in Verbindung steht und aufgrund von Steuerungs-Sollvorgaben Steuerungskommandos ermittelt und diese an die Antriebsvorrichtung (30) übermittelt, um einen Geschwindigkeitsvektor des Fahrzeugs (1) einzustellen, **dadurch gekennzeichnet, dass** das Fahrzeug (1) aufweist:
eine Andock-Vorgabefunktion (60), die auf Basis von Angaben, die einen Fahrzeug-Ist-Zustand des Fahrzeugs (1) zumindest mit einer Ist-Position definieren, eine Soll-Andocktrajektorie für das Fahrzeug (1) zu einem Soll-Andockzustand erzeugt, wobei der Soll-Andockzustand durch Angaben beschrieben ist, die zumindest eine Soll-Position definieren und wobei bei dem Soll-Andockzustand das Fahrzeug (1) mit einer Anlagevorrichtung des Fahrzeug-Rahmens (10) an einer Andockvorrichtung (101) einer Werkzeug-Vorrichtung (100) angedockt ist, wobei die Andock-Vorgabefunktion (60) an die Steuerungsfunktion (50) die Soll-Andocktrajektorie als Steuerungs-Sollvorgabe zum Bewegen des Fahrzeugs (1) entlang derselben übermittelt,
eine Manövrier-Vorgabefunktion (70) mit einem Werkzeugbewegungs-Modell, das Angaben, die einen Werkzeug-Ist-Zustand zumindest mit einer Werkzeug-Ist-Position und einer Werkzeug-Ist-Ausrichtung einer Referenzstelle der Werkzeug-Vorrichtung (100) definieren, in Angaben umrechnet, die eine Fahrzeug-Ist-Position und eine Fahrzeug-Ist-Ausrichtung definieren, wenn sich das Fahrzeug in einem an der Werkzeug-Vorrichtung (100) angedockten Zustand befindet, wobei die Manövrier-Vorgabefunktion (70) eine Manövriertrajektorien-Erzeugungsfunktion aufweist, die auf der Basis eines jeweiligen Werkzeug-Ist-Zustands eine Referenzstelle-Manövriertrajektorie und in Abhängigkeit von dieser mit dem Werkzeugbewegungs-Modell eine Fahrzeug-Manövriertrajektorie, die das Fahrzeug (1) in einen Soll-Aufnahmezustand bringt, ermittelt, entlang der das Fahrzeug (1) die Werkzeug-Vorrichtung (100) von dem Werkzeug-Ist-Zustand in einen Werkzeug-Soll-Zustand manövriert, bei dem eine Referenzstellen-Position der Referenzstelle innerhalb einer Soll-Differenz zu einer Ladungseinheit-Position der Ladungseinheit (L) gelegen ist, wobei die Manövrier-Vorgabefunktion (70) in Bezug auf die Fahrzeug-Manövriertrajektorie Steuerungs-Sollvorgaben zum Bewegen des Fahrzeugs (1) entlang der Fahrzeug-Manövriertrajektorie an die Antriebsvorrichtung übermittelt.

2. Fahrzeug (1) nach dem Anspruch 1, wobei das Fahrzeug eine Aufnahmefunktion aufweist, die das Fahrzeug (1) von dem Zeitpunkt, ab dem sich das Fahrzeug (1) in dem Soll-Aufnahmezustand relativ zum Werkzeug-Soll-Zustand der Werkzeug-Vorrichtung (100) befindet, in diesem Zustand hält, bis die Werkzeug-Vorrichtung (100) eine Ladungseinheit (L) auf die Aufnahmefläche (9) befördert hat.

3. Fahrzeug (1) nach dem Anspruch 1 oder 2, wobei das Fahrzeug (1) eine elektrische Kontaktierungsvorrichtung aufweist, die an einer Anlagefläche des Fahrzeug-Rahmens (10) zum Anlegen an eine Andockvorrichtung (101) der Werkzeug-Vorrichtung (100) ausgebildet ist.

4. Fahrzeug (1) nach einem der voranstehenden Ansprüche, wobei das Fahrzeug (1) eine Fahrzeug-Funktionsschnittstelle zum Anschluss an eine Werkzeug-Funktionsschnittstelle aufweist, die an einer Anlagefläche des Fahrzeug-Rahmens (10) zum Anlegen an eine Anlagefläche einer Andockvorrichtung (101) der Werkzeug-Vorrichtung (100) ausgebildet ist und die zur Übermittlung eines Initiierungssignals zur Aktivierung einer Aufnahmefunktion der Werkzeug-Vorrichtung (100) zur Beförderung der Ladungseinheit (L) auf das Aufnahmebauteil (7) des Fahrzeugs (1) vorgesehen ist.

5. Fahrzeug (1) nach einem der voranstehenden Ansprüche, wobei das Fahrzeugsystem (S) eine Fahrzeug-Kommunikationsvorrichtung aufweist, die mit einer im Betriebsbereich stationären Logistik-Vorrichtung in Funkverbindung gebracht werden kann und bei Empfang Daten, die eine Ladungseinheit-Position zumindest einer Ladungseinheit (L) definieren, an die Manövriertrajektorien-Erzeugungsfunktion übermittelt.

6. Fahrzeug (1) nach einem der voranstehenden Ansprüche, wobei das Fahrzeugsystem (S) eine Fahrzeug-Kommunikationsvorrichtung aufweist, die mit einer im Betriebsbereich stationären Logistik-Vorrichtung in Funkverbindung gebracht werden kann und, bei Empfang von Daten zum Werkzeug-Ist-Zustand zumindest einer Werkzeug-Vorrichtung (100) von der Logistik-Vorrichtung, diese Daten an die Manövriertrajektorien-Erzeugungsfunktion übermittelt.

7. Fahrzeug (1) nach einem der voranstehenden Ansprüche, wobei das Fahrzeugsystem (S) eine Fahrzeug-Kommunikationsvorrichtung aufweist, die mit einer Werkzeug-Kommunikationsvorrichtung zumindest einer Werkzeug-Vorrichtung (100) in Funkverbindung gebracht werden kann, die Daten zum Werkzeug-Ist-Zustand der Werkzeug-Vorrichtung (100) an die Manövriertrajektorien-Erzeugungsfunktion übermittelt.

8. Fahrzeug (1) nach einem der Ansprüche 4 bis 7, wobei das Fahrzeugsystem (S) eine Fahrzeug-Kommunikationsvorrichtung aufweist, die von einer Werkzeug-Kommunikationsvorrichtung Daten zum Werkzeug-Ist-Zustand der Werkzeug-Vorrichtung (100) zur Übermittlung an die Manövriertrajektorien-Erzeugungsfunktion empfängt und aufgrund des Empfangs an die Manövriertrajektorien-Erzeugungsfunktion übermittelt.

9. Fahrzeug (1) nach einem der voranstehenden Ansprüche, wobei das Fahrzeugsystem (S) eine Fahrzeug-Kommunikationsvorrichtung aufweist, die mit einer Werkzeug-Kommunikationsvorrichtung zumindest einer Werkzeug-Vorrichtung (100) in Funkverbindung oder in einer Leitungsverbindung mit einer elektrischen Kontaktierungsvorrichtung gebracht werden kann, die die Daten zum Werkzeug-Ist-Zustand der Werkzeug-Vorrichtung (100) an die Manövriertrajektorien-Erzeugungsfunktion übermittelt und dabei von dieser aktuelle Daten zur Ladungseinheit-Position der Ladungseinheit (L) zumindest einer auf der Betriebsfläche gelegenen Ladungseinheit (L) empfängt.

10. Fahrzeug (1) nach einem der voranstehenden Ansprüche, wobei das Fahrzeug (1) einen Identifikationszeichen-Sensor aufweist, der am Aufnahmebauteil (7) angeordnet ist, um ein Identifikationszeichen einer Ladungseinheit (L) zu erfassen.

11. Fahrzeug (1) nach einem der voranstehenden Ansprüche, wobei die Anlagevorrichtung des Fahrzeug-Rahmens (10) eine Außenfläche oder eine Kopplungsvorrichtung des Fahrzeugs (1) ist

12. Verfahren zum Bewegen eines Fahrzeugs (1) auf einer Betriebsfläche und zum Befördern zumindest einer Ladungseinheit (LE), die auf der Betriebsfläche gelegen ist, auf ein Aufnahmebauteil (7) des Fahrzeugs (1), **dadurch gekennzeichnet, dass** das Verfahren die folgenden Schritte aufweist:
Andocken des Fahrzeugs (1) an eine Werkzeug-Vorrichtung (100) durch Steuern des Fahrzeugs (1) entlang einer Soll-Andocktrajektorie, die von einer Andock-Vorgabefunktion (60) auf Basis von Angaben, die einen Fahrzeug-Ist-Zustand des Fahrzeugs (1) mit zumindest einer Ist-Position definieren, zu einem Soll-Andockzustand des Fahrzeugs (1) ermittelt worden ist, wobei der Soll-Andockzustand durch Angaben beschrieben ist, die zumindest eine Soll-Position definieren und wobei bei dem Soll-Andockzustand das Fahrzeug (1) an einer Anlagevorrichtung des Fahrzeug-Rahmens (10) an einer Andockvorrichtung (101) der Werkzeug-Vorrichtung (100) angedockt ist,
Manövrieren der Werkzeug-Vorrichtung (100), an der das Fahrzeug (1) angedockt ist, durch Steuern des Fahrzeugs (1) entlang einer Fahrzeug-Manövriertrajektorie zu einem Soll-Aufnahmezustand des Fahrzeugs (1) als Steuerungs-Sollvorgabe, wobei die Fahrzeug-Manövriertrajektorie aufgrund einer Referenzstelle-Manövriertrajektorie und eines Werkzeugbewegung-Modells ermittelt worden ist, das Angaben, die einen Werkzeug-Ist-Zustand mit einer Werkzeug-Ist-Position und eine Werkzeug-Ist-Ausrichtung einer Referenzstelle der Werkzeug-Vorrichtung (100) definieren, in Angaben umrechnet, die eine Fahrzeug-Ist-Position und eine Fahrzeug-Ist-Ausrichtung definieren, wobei bei dem Soll-Aufnahmezustand des Fahrzeugs (1) die Referenzstelle der Werkzeug-Vorrichtung (100) in einem vorbestimmten Relativzustand bezüglich der Ist-Position der Ladungseinheit (L) gelegen ist.

13. Verfahren nach dem Anspruch 12, wobei nach dem Erreichen des Soll-Aufnahmezustands des Fahrzeugs (1) die Steuerungsfunktion (50) Steuerungs-Sollvorgaben erzeugt, mit denen das Fahrzeug (1) in dem Fahrzeug-Aufnahmezustand relativ zum Werkzeug-Aufnahmezustand der Werkzeug-Vorrichtung (100) gehalten wird, bis die Werkzeug-Vorrichtung (100) eine Ladungseinheit (L) auf das Aufnahmebauteil (7) gefördert hat.

14. Verfahren nach einem der Ansprüche 12 bis 13,
wobei die Werkzeug-Vorrichtung (100) mittels einer Positionssensor-Vorrichtung Positionsdaten zu einer Ist-Position der Werkzeug-Vorrichtung (100) ermittelt und an eine Werkzeug-Kommunikationsvorrichtung übermittelt,
wobei die Werkzeug-Kommunikationsvorrichtung die Positionsdaten zu einer Ist-Position der Werkzeug-Vorrichtung (100) über Funk oder über eine Leitungsverbindung mit einer elektrische Kontaktierungsvorrichtung an eine Fahrzeug-Kommunikationsvorrichtung übermittelt,
wobei die Fahrzeug-Kommunikationsvorrichtung die Positionsdaten zu einer Ist-Position der Werkzeug-Vorrichtung (100) nach dem Empfang derselben an die Manövriertrajektorien-Erzeugungsfunktion übermittelt.

15. Verfahren nach einem der Ansprüche 12 bis 14,
wobei die Werkzeug-Vorrichtung (100) mittels eines Ladungseinheit-Sensors aktuelle Daten zu einer Ladungseinheit-Position zumindest einer auf der Betriebsfläche gelegenen Ladungseinheit (L) ermittelt und diese Daten über eine Funkverbindung oder über eine elektrische Leitungsverbindung mit einer elektrischen Kontaktierungsvorrichtung an eine Fahrzeug-Kommunikationsvorrichtung übermittelt,
wobei die Fahrzeug-Kommunikationsvorrichtung die Positionsdaten zu einer Ladungseinheit-Position der zumindest einen Ladungseinheit (L) nach dem Empfang derselben an die Manövriertrajektorien-Erzeugungsfunktion übermittelt.

16. Verfahren nach einem der Ansprüche 12 bis 15,
wobei nach dem Andocken das Fahrzeug (1) mit einer Anlagevorrichtung des Fahrzeug-Rahmens (10) an der Andockvorrichtung (101) einer Werkzeug-Vorrichtung (100) und dem Manövrieren der Werkzeug-Vorrichtung (100) in den Werkzeug-Sollzustand die Werkzeug-Vorrichtung (100) die Ladungseinheit (L) mittels einer Fördervorrichtung auf das Aufnahmebauteil (7) des Fahrzeugs (1) befördert,
wobei die Fördervorrichtung einen Identifikationszeichen-Sensor aufweist, an dem die Ladungseinheit (L) während des Beförderns desselben auf das Aufnahmebauteil (7) vorbeibewegt wird und ein Identifikationszeichen einer Ladungseinheit (L) erfasst wird,
wobei der Identifikationszeichen-Sensor der Werkzeug-Vorrichtung (100) mit der Werkzeug-Kommunikationsvorrichtung funktional verbunden ist und das Identifikationszeichen an die Werkzeug-Kommunikationsvorrichtung übermittelt, nach dem das Identifikationszeichen erfasst worden ist,
wobei die Werkzeug-Kommunikationsvorrichtung nach Empfang des Identifikationszeichens dieses an eine Logistik-Vorrichtung oder das Fahrzeug (1) übermittelt.

17. Verfahren nach einem der Ansprüche 12 bis 16,
wobei bei dem Befördern der Ladungseinheit (L) auf das Fahrzeug (1) ein Identifikationszeichen von einem Identifikationszeichen-Sensor des Fahrzeugs (1) erfasst wird,
wobei der Identifikationszeichen-Sensor des Fahrzeugs (1) mit der Fahrzeug-Kommunikationsvorrichtung funktional verbunden ist und das Identifikationszeichen an die Fahrzeug-Kommunikationsvorrichtung übermittelt, nach dem das Identifikationszeichen erfasst worden ist,
wobei die Fahrzeug-Kommunikationsvorrichtung nach Empfang des Identifikationszeichens dieses an eine Logistik-Vorrichtung übermittelt.

## Claims

1. Vehicle (1) with a running gear (5), with a drive device (30) which is connected to the running gear (5) and which adjusts a speed vector of the vehicle (1) on an operational surface, and with a vehicle frame (10) which is arranged on the running gear (5) and which comprises a receiving component (7) for placing at least one load unit (L) located on the operational surface, wherein the vehicle (1) comprises a vehicle system (S) with:
a control function (50) which is functionally connected to the drive device (30) and determines control commands based on control target data and transmits them to the drive device (30) to adjust a speed vector of the vehicle (1), **characterized in that** the vehicle (1) comprises:
a docking setting function (60) which generates a target docking trajectory for the vehicle (1) to a target docking state based on data defining a vehicle actual state of the vehicle (1) at least with an actual position, wherein the target docking state is described by data which define at least a target position and wherein, in the target docking state, the vehicle (1) is docked with a contact device of the vehicle frame (10) on a docking device (101) of a tool device (100), wherein the docking setting function (60) transmits the target docking trajectory to the control function (50) as a control target data for moving the vehicle (1) along the target docking trajectory,
a maneuvering setting function (70) comprising a tool movement model which converts data defining a tool actual state at least with a tool actual position and with a tool actual orientation of a reference point of the tool device (100) into data defining a vehicle actual position and a vehicle actual orientation when the vehicle is in a state docked with the tool device (100), wherein the maneuvering setting function (70) comprises a maneuvering trajectory generation function which determines, on the basis of a respective tool-actual state, a reference point maneuvering trajectory and which, as a function of the latter, with the tool movement model determines a vehicle maneuvering trajectory into a target receiving state of the vehicle (1) along which the vehicle (1) maneuvers the tool device (100) from the tool actual state to a tool target state in which a reference point position of the reference point is located within a target difference to a load unit position of the load unit (L), wherein the maneuvering setting function (70) transmits control target data with respect to the vehicle maneuvering trajectory for moving the vehicle (1) along the vehicle maneuvering trajectory to the drive device.

2. Vehicle (1) according to claim 1, wherein the vehicle comprises a reception function which holds the vehicle (1) in this state from the time the vehicle (1) is in the target receiving state relative to the tool target state of the tool device (100) until the tool device (100) has conveyed a load unit (L) to the receiving surface (9).

3. Vehicle (1) according to claim 1 or 2, wherein the vehicle (1) comprises an electrical contacting device formed on a contact surface of the vehicle frame (10) for contacting a docking device (101) of the tool device (100).

4. Vehicle (1) according to one of the preceding claims, wherein the vehicle (1) comprises a vehicle function interface for connection to a tool function interface, wherein the vehicle function interface is formed on a contact surface of the vehicle frame (10) for contacting a contact surface of a docking device (101) of the tool device (100) and wherein the vehicle function interface is provided to transmit an initiation signal for activating a reception function of the tool device (100) for conveying the load unit (L) on the receiving component (7) of the vehicle (1).

5. Vehicle (1) according to one of the preceding claims, wherein the vehicle system (S) comprises a vehicle communication device which can be brought into radio contact with a logistics device which is stationary in the operational area and, upon receipt, transmits data defining a load unit position of at least one load unit (L) to the maneuvering trajectory generation function.

6. Vehicle (1) according to one of the preceding claims, wherein the vehicle system (S) comprises a vehicle communication device which can be brought into radio contact with a logistics device stationary in the operational area and, upon receipt of data relating to the tool-actual state of at least one tool device (100) from the logistics device, transmits this data to the maneuvering trajectory generation function.

7. Vehicle (1) according to one of the preceding claims, wherein the vehicle system (S) comprises a vehicle communication device, which can be brought into radio contact with a tool communication device of at least one tool device (100), which transmits data of the tool-actual state of the tool device (100) to the maneuvering trajectory generation function.

8. Vehicle (1) according to any one of claims 4 to 7, wherein the vehicle system (S) comprises a vehicle communication device which receives from a tool communication device data related to the tool actual state of the tool device (100) for transmission to the maneuvering trajectory generation function and transmits the data to the maneuvering trajectory generation function based on the receipt.

9. Vehicle (1) according to one of the preceding claims, wherein the vehicle system (S) comprises a vehicle communication device which can be brought into radio contact with a tool communication device of at least one tool device (100) or in a line connection with an electrical contacting device which transmits the data related to the tool-actual state of the tool device (100) to the maneuvering trajectory generation function and thereby receives from the tool communication device actual data regarding the load unit position of the load unit (L) at least one load unit (L) located on the operational surface.

10. Vehicle (1) according to one of the preceding claims, wherein the vehicle (1) comprises an identification character sensor which is arranged on the receiving component (7) in order to capture an identification character of a load unit (L).

11. Vehicle (1) according to one of the preceding claims, wherein the contact device of the vehicle frame (10) is an outer surface or a coupling device of the vehicle (1)

12. Method for moving a vehicle (1) on an operational surface and for conveying at least one load unit (LE) located on the operational surface onto a receiving component (7) of the vehicle (1), **characterized in that** the method comprises the following steps:
docking the vehicle (1) to a tool device (100) by controlling the vehicle (1) along a target docking trajectory, determined by a docking setting function (60) based on data defining a vehicle actual state of the vehicle (1) with at least one actual position, to a target docking state of the vehicle (1), wherein the target docking state is described by data which define at least a target position and wherein, in the target docking state, the vehicle (1) contacts a contact device of the vehicle frame (10) of the tool device (100),
maneuvering the tool device (100), to which the vehicle (1) is docked, by controlling the vehicle (1) along a vehicle maneuvering trajectory to a target receiving state of the vehicle (1) as a control target data, wherein the vehicle maneuvering trajectory has been determined based on a reference point maneuvering trajectory and a tool movement model which converts data, which define a tool actual state with a tool actual position and a tool actual orientation of a reference point of the tool device (100), into data which define a vehicle actual position and a vehicle actual orientation, wherein in the target receiving state of the vehicle (1) the reference point of the tool device (100) is located in a predetermined relative state with respect to the actual position of the load unit (L).

13. Method according to claim 12, wherein, after reaching the target receiving state of the vehicle (1), the control function (50) generates control target data with which the vehicle (1) is held in the vehicle receiving state relative to the tool receiving state of the tool device (100) until the tool device (100) has conveyed a load unit (L) onto the receiving component (7).

14. Method according to one of claims 12 to 13,
wherein the tool device (100) determines position data relating to an actual position of the tool device (100) by means of a position sensor device and transmits the data to a tool communication device,
wherein the tool communication device transmits the position data related to an actual position of the tool device (100) via radio contact or via a line connection with an electrical contacting device to a vehicle communication device,
wherein the vehicle communication device transmits the position data related to an actual position of the tool device (100), after reception of the same, to the maneuvering trajectory generation function.

15. Method according to one of claims 12 to 14,
wherein the tool device (100) determines actual data related to a load unit position of at least one load unit (L) located on the operational surface by means of a load unit sensor and transmits said data via a radio contact or via an electrical line connection with an electrical contacting device to a vehicle communication device,
wherein the vehicle communication device transmits the position data related to a load unit position of the at least one load unit (L) after receiving it to the maneuvering trajectory generation function.

16. Method according to one of claims 12 to 15,
wherein after the docking of the vehicle (1) with a contact device of the vehicle frame (10) on the docking device (101) of a tool device (100) and after the maneuvering of the tool device (100) into the tool target state, the tool device (100) conveys the load unit (L) to the receiving component (7) of the vehicle (1) by means of a conveying device,
wherein the conveying device comprises an identification character sensor, past which the load unit (L) is moved during the conveying thereof onto the receiving component (7) and an identification character of a load unit (L) is detected,
wherein the identification character sensor of the tool device (100) is functionally connected to the tool communication device and transmits the identification character to the tool communication device after which the identification character has been captured,
wherein, after receiving the identification character, the tool communication device transmits the same to a logistics device or the vehicle (1).

17. Method according to one of claims 12 to 16,
wherein, when the load unit (L) is conveyed to the vehicle (1), an identification character is captured by an identification character sensor of the vehicle (1),
wherein the identification character sensor of the vehicle (1) is functionally connected to the vehicle communication device and transmits the identification character to the vehicle communication device after which the identification character has been detected,
wherein, after receiving the identification character, the vehicle communication device transmits this to a logistics device.

## Revendications

1. Véhicule (1) avec un train de roulement (5), avec un dispositif d'entraînement (30) qui est relié au train de roulement (5) et qui règle un vecteur de vitesse du véhicule (1) sur une surface opérationnelle, et avec un châssis du véhicule (10) qui est disposé sur le train de roulement (5) et qui comprend un composant de réception (7) pour placer au moins une unité de charge (L) située sur la surface opérationnelle, dans lequel le véhicule (1) comprend un système de véhicule (S) avec :
une fonction de commande (50) qui est connectée fonctionnellement au dispositif d'entraînement (30) et qui détermine des commandes de contrôle sur la base de données cibles de contrôle et les transmet au dispositif d'entraînement (30) pour ajuster un vecteur de vitesse du véhicule (1), **caractérisé en ce que** le véhicule (1) comprend :
une fonction de réglage d'accostage (60) qui génère une trajectoire d'accostage cible pour le véhicule (1) vers un état d'accostage cible sur la base de données définissant un état réel du véhicule (1) au moins avec une position réelle, l'état d'accostage cible étant décrit par des données qui définissent au moins une position cible et dans lequel, dans l'état d'accostage cible, le véhicule (1) est accosté avec un dispositif de contact du châssis du véhicule (10) sur un dispositif d'accostage (101) d'un dispositif outillage (100), dans lequel la fonction de réglage d'accostage (60) transmet la trajectoire d'accostage cible à la fonction de commande (50) en tant que données cibles de commande pour déplacer le véhicule (1) le long de la trajectoire d'accostage cible,
une fonction de réglage de manoeuvre (70) comprenant un modèle de mouvement d'outil qui convertit les données définissant un état réel de l'outil au moins avec une position réelle de l'outil et avec une orientation réelle de l'outil d'un point de référence du dispositif d'outillage (100) en données définissant une position réelle du véhicule et une orientation réelle du véhicule lorsque le véhicule est dans un état d'accostage avec le dispositif d'outillage (100), dans laquelle la fonction de réglage de manoeuvre (70) comprend une fonction de génération de trajectoire de manoeuvre qui détermine, sur la base d'un état réel respectif de l'outil, une trajectoire de manoeuvre du point de référence et qui, en fonction de cette dernière, avec le modèle de mouvement de l'outil, détermine une trajectoire de manoeuvre du véhicule dans un état de réception cible du véhicule (1) le long duquel le véhicule (1) manoeuvre le dispositif d'outillage (100) de l'état réel de l'outil à un état cible de l'outil dans lequel une position du point de référence est située dans une différence cible par rapport à une position de l'unité de charge de l'unité de charge (L), La fonction de réglage de manoeuvre (70) transmet des données de cible de commande par rapport à la trajectoire de manoeuvre du véhicule pour déplacer le véhicule (1) le long de la trajectoire de manoeuvre du véhicule au dispositif d'entraînement.

2. Véhicule (1) selon la revendication 1, dans lequel le véhicule comprend une fonction de réception qui maintient le véhicule (1) dans cet état à partir du moment où le véhicule (1) est dans l'état cible de réception par rapport à l'état cible d'outil du dispositif d'outillage (100) jusqu'à ce que le dispositif d'outillage (100) ait acheminé une unité de charge (L) jusqu'à la surface de réception (9).

3. Véhicule (1) selon la revendication 1 ou 2, dans lequel le véhicule (1) comprend un dispositif de contact électrique formé sur une surface de contact du châssis du véhicule (10) pour entrer en contact avec un dispositif d'accostage (101) du dispositif outil (100).

4. Véhicule (1) selon l'une des revendications précédentes, dans lequel le véhicule (1) comprend une interface de fonction de véhicule pour la connexion à une interface de fonction d'outil, dans lequel l'interface de fonction de véhicule est formée sur une surface de contact du châssis du véhicule (10) pour contacter une surface de contact d'un dispositif d'accostage (101) du dispositif d'outil (100) et dans lequel l'interface de fonction de véhicule est prévue pour transmettre un signal d'initiation pour activer une fonction de réception du dispositif d'accostage (100) pour acheminer l'unité de charge (L) sur le composant de réception (7) du véhicule (1).

5. Véhicule (1) selon l'une des revendications précédentes, dans lequel le système de véhicule (S) comprend un dispositif de communication de véhicule qui est configuré pour pouvoir être mis en contact radio avec un dispositif logistique qui est stationnaire dans la zone opérationnelle et qui, sur réception, transmet des données définissant une position d'unité de charge d'au moins une unité de charge (L) à la fonction de génération de trajectoire de manoeuvre.

6. Véhicule (1) selon l'une des revendications précédentes, dans lequel le système véhicule (S) comprend un dispositif de communication véhicule qui est configuré pour pouvoir être mis en contact radio avec un dispositif logistique stationnaire dans la zone opérationnelle et qui, sur réception de données relatives à l'état outil-actuel d'au moins un dispositif outil (100) en provenance du dispositif logistique, transmet ces données à la fonction de génération de trajectoire de manoeuvre.

7. Véhicule (1) selon l'une des revendications précédentes, dans lequel le système de véhicule (S) comprend un dispositif de communication de véhicule, qui est configuré pour pouvoir être mis en contact radio avec un dispositif de communication d'outil d'au moins un dispositif d'outil (100), qui transmet des données de l'état réel de l'outil du dispositif d'outil (100) à la fonction de génération de trajectoire de manoeuvre.

8. Véhicule (1) selon l'une des revendications 4 à 7, dans lequel le système de véhicule (S) comprend un dispositif de communication de véhicule qui reçoit d'un dispositif de communication d'outil des données relatives à l'état réel d'outil du dispositif d'outil (100) pour transmission à la fonction de génération de trajectoire de manoeuvre et transmet les données à la fonction de génération de trajectoire de manoeuvre sur la base de la réception.

9. Véhicule (1) selon l'une des revendications précédentes, dans lequel le système de véhicule (S) comprend un dispositif de communication de véhicule qui est configuré pour pouvoir être mis en contact radio avec un dispositif de communication d'outil d'au moins un dispositif d'outil (100) ou en connexion de ligne avec un dispositif de contact électrique qui transmet les données relatives à l'état réel d'outil du dispositif d'outil (100) à la fonction de génération de trajectoire de manoeuvre et reçoit ainsi du dispositif de communication d'outil des données réelles concernant la position de l'unité de charge (L) d'au moins une unité de charge (L) située sur la surface opérationnelle.

10. Véhicule (1) selon l'une des revendications précédentes, dans lequel le véhicule (1) comprend un capteur de caractère d'identification qui est disposé sur le composant de réception (7) afin de capturer un caractère d'identification d'une unité de charge (L).

11. Véhicule (1) selon l'une des revendications précédentes, dans lequel le dispositif de contact du châssis du véhicule (10) est une surface extérieure ou un dispositif d'attelage du véhicule (1).

12. Procédé de déplacement d'un véhicule (1) sur une surface opérationnelle et d'acheminement d'au moins une unité de charge (LE) située sur la surface opérationnelle sur un élément de réception (7) du véhicule (1), **caractérisé en ce que** le procédé comprend les étapes suivantes :
accoster le véhicule (1) à un dispositif outil (100) en commandant le véhicule (1) le long d'une trajectoire d'accostage cible, déterminée par une fonction de réglage d'accostage (60) sur la base de données définissant un état réel du véhicule (1) avec au moins une position réelle, jusqu'à un état d'accostage cible du véhicule (1), dans lequel l'état d'accostage cible est décrit par des données qui définissent au moins une position cible et dans lequel, dans l'état d'accostage cible, le véhicule (1) entre en contact avec un dispositif de contact du châssis du véhicule (10) du dispositif outil (100),
manoeuvrer le dispositif d'outillage (100), auquel le véhicule (1) est accosté, en commandant le véhicule (1) le long d'une trajectoire de manoeuvre du véhicule vers un état de réception cible du véhicule (1) en tant que données cibles de commande, la trajectoire de manoeuvre du véhicule ayant été déterminée sur la base d'une trajectoire de manoeuvre du point de référence et d'un modèle de mouvement de l'outil qui convertit les données, qui définissent un état réel de l'outil avec une position réelle de l'outil et une orientation réelle de l'outil d'un point de référence du dispositif d'outillage (100), en données qui définissent une position réelle du véhicule et une orientation réelle du véhicule, dans lequel dans l'état de réception cible du véhicule (1) le point de référence du dispositif d'outillage (100) est situé dans un état relatif prédéterminé par rapport à la position réelle de l'unité de charge (L).

13. Procédé selon la revendication 12, dans lequel, après avoir atteint l'état de réception cible du véhicule (1), la fonction de commande (50) génère des données cibles de commande avec lesquelles le véhicule (1) est maintenu dans l'état de réception du véhicule par rapport à l'état de réception de l'outil du dispositif d'outillage (100) jusqu'à ce que le dispositif d'outillage (100) ait acheminé une unité de charge (L) sur le composant de réception (7).

14. Procédé selon l'une des revendications 12 à 13,
dans lequel le dispositif d'outillage (100) détermine des données de position relatives à une position réelle du dispositif d'outillage (100) au moyen d'un dispositif de capteur de position et transmet les données à un dispositif de communication d'outillage,
dans lequel le dispositif de communication d'outil transmet les données de position relatives à une position réelle du dispositif d'outil (100) via un contact radio ou via une connexion de ligne avec un dispositif de contact électrique à un dispositif de communication de véhicule,
dans lequel le dispositif de communication du véhicule transmet les données de position relatives à la position réelle du dispositif d'outillage (100), après réception de celles-ci, à la fonction de génération de trajectoire de manoeuvre.

15. Procédé selon l'une des revendications 12 à 14,
dans lequel le dispositif d'outillage (100) détermine des données réelles liées à une position d'unité de charge d'au moins une unité de charge (L) située sur la surface opérationnelle au moyen d'un capteur d'unité de charge et transmet lesdites données via un contact radio ou via une connexion de ligne électrique avec un dispositif de contact électrique à un dispositif de communication de véhicule,
dans lequel le dispositif de communication du véhicule transmet les données de position relatives à une position d'unité de charge de l'au moins une unité de charge (L) après les avoir reçues à la fonction de génération de trajectoire de manoeuvre.

16. Procédé selon l'une des revendications 12 à 15,
dans lequel après l'accostage du véhicule (1) avec un dispositif de contact du châssis du véhicule (10) sur le dispositif d'accostage (101) d'un dispositif d'outillage (100) et après la manoeuvre du dispositif d'outillage (100) dans l'état de cible d'outil, le dispositif d'outillage (100) achemine l'unité de charge (L) vers le composant de réception (7) du véhicule (1) au moyen d'un dispositif d'acheminement,
dans lequel le dispositif d'acheminement comprend un capteur de caractères d'identification, devant lequel l'unité de charge (L) est déplacée pendant son acheminement sur le composant de réception (7) et un caractère d'identification d'une unité de charge (L) est détecté,
dans lequel le capteur de caractère d'identification du dispositif d'outillage (100) est connecté fonctionnellement au dispositif de communication de l'outil et transmet le caractère d'identification au dispositif de communication de l'outil après que le caractère d'identification a été capturé,
dans lequel, après avoir reçu le caractère d'identification, le dispositif de communication d'outil le transmet à un dispositif logistique ou au véhicule (1).

17. Procédé selon l'une des revendications 12 à 16,
dans lequel, lorsque l'unité de charge (L) est acheminée vers le véhicule (1), un caractère d'identification est capturé par un capteur de caractère d'identification du véhicule (1), dans lequel le capteur de caractère d'identification du véhicule (1) est fonctionnellement connecté au dispositif de communication du véhicule et transmet le caractère d'identification au dispositif de communication du véhicule après que le caractère d'identification a été détecté,
dans lequel, après avoir reçu le caractère d'identification, le dispositif de communication du véhicule le transmet à un dispositif logistique.
